# EUROPEAN PATENT SPECIFICATION

(11) **EP 0 598 628 B1**
(45) Date of publication and mention of the grant of the patent: **24.09.1997**
(21) Application number: 93309249.6
(22) Date of filing: 19.11.1993
(51) Int. Cl.: C08F 4/64, C08F 4/653, C08F 210/16, C08F 255/02, C08F 8/46, C08J 5/18, C08L 23/04

(54) **Catalyst for olefin polymerization and process for olefin polymerization using the same,**
Olefinpolymerisationkatalysator und Verfahren zur Olefinpolymerisation unter Verwendung desselben,
Catalyseur de polymérisation d'oléfines et procédé de polymérisation l'utilisant,

(30) Priority: 19.11.1992 JP 310614/92; 19.11.1992 JP 310629/92; 19.11.1992 JP 310630/92; 19.11.1992 JP 310631/92
(43) Date of publication of application: 25.05.1994
(60) Divisional application: 96114214.8
(73) Proprietor: MITSUI PETROCHEMICAL INDUSTRIES, LTD., Tokyo 100 (JP)
(72) Inventor: Tsutsui, Toshiyuki, c/o Mitsui Petrochemical, Waki-cho, Kuga-gun, Yamaguchi 740 (JP); Yoshitsugu, Ken, c/o Mitsui Petrochemical, Waki-cho, Kuga-gun, Yamaguchi 740 (JP); Takahashi, Mamoru, c/o Mitsui Petrochemical, Waki-cho, Kuga-gun, Yamaguchi 740 (JP); Todo, Akira, c/o Mitsui Petrochemical, Waki-cho, Kuga-gun, Yamaguchi 740 (JP); Ohta, Seiji, c/o Mitsui Petrochemical, Waki-cho, Kuga-gun, Yamaguchi 740 (JP); Inagaki, Hajime, c/o Mitsui Petrochemical, Waki-cho, Kuga-gun, Yamaguchi 740 (JP)
(74) Representative: Cresswell, Thomas Anthony

(56) References cited:
- EP-A- 0 090 418
- EP-A- 0 128 046
- EP-A- 0 230 344
- EP-A- 0 268 294
- EP-A- 0 452 920
- EP-A- 0 495 099
- PATENT ABSTRACTS OF JAPAN vol. 16, no. 528 (C-1001) 29 October 1992 & JP-A-04 198 228 (MITSUI PETROCHEMICAL INDUSTRIES) 17 July 1992
- DATABASE WPI Derwent Publications Ltd., London, GB; AN 92-099902 'high impact strength PE resin compsn' & JP-A-4 041 537 (SHOWA DENKO KABUSHIKI KAISHA) 12 February 1992

## Description

The present invention relates to an olefin polymerization catalyst and to a process for olefin polymerization using said catalyst. More particularly, the invention relates to an olefin polymerization catalyst which is capable of producing an olefin polymer having excellent transparency, mechanical strength and moldability, and to an ethylene homopolymer or ethylene/α-olefin copolymer having high moldability which is capable of giving a film having a higher transparency and mechanical strength than films obtained from known ethylene copolymers.

Ethylene copolymers have heretofore been molded by various molding methods, and used in many fields. The requirements for the characteristics of the ethylene copolymers differ depending on the molding methods and uses. For example, when an inflation film is molded at a high speed, it is necessary to select an ethylene copolymer having a high melt tension compared with its molecular weight in order to stably conduct high speed molding without fluctuation or tearing of bubbles. An ethylene copolymer is required to have similar characteristics in order to prevent sag or tearing in blow molding, or to suppress width shortage to the minimum range in T-die molding.

JP-A-90810/1981 and JP-A-106806/1985 propose a method for improving the moldability by improving the melt tension and die swell ratio of ethylene polymers obtained by using Ziegler type catalysts, especially a titanium type catalyst.

The ethylene polymers, especially low density ethylene polymers, obtained using a titanium catalyst, however, generally have problems such as a broad composition distribution and stickiness of their molded articles such as films.

Of the ethylene polymers prepared using Ziegler type catalysts, those obtained by using chromium type catalysts have relatively good melt tension but poor heat stability. This is thought to be due to the chain terminals of the ethylene polymers tending to become unsaturated bonds.

It is known that the ethylene polymers obtained by using a metallocene catalyst from among the Ziegler type catalysts have merits such as a narrow composition distribution and a low stickiness of their molded articles such as films. However, it is described in, for example, JP-A-35007/1985, that an ethylene polymer obtained by using a zirconocene compound formed from a cyclopentadienyl derivative contains one terminal unsaturated bond per molecule, and hence this ethylene polymer presumably has poor heat stability similarly to the above-mentioned ethylene polymer obtained using the chromium type catalyst.

EP-A-0 128 046 discloses a catalyst for olefin polymerization comprising (a) an alumoxane and (b) at least two different cyclopentadienyl compounds with group IV transition metal having different reactivity. The soluble metallocene may be supported on a catalyst support. In examples 2 and 3 combinations of bis (pentamethylcyclopentadienyl) zirconium dichloride and bis(methylcyclopentadienyl) zirconium dichloride or bis (methylcyclopentadienyl) zirconium dimethyl are used as homogeneous catalyst components, which provide a low molecular weight ethylene/ethylene-propylene polymer blend.

Accordingly, it will industrially be of great value to provide an olefin polymerization catalyst or olefin polymerization process by which an olefin copolymer, particularly an ethylene copolymer, having good heat stability, high mechanical strength and a narrow composition distribution can be prepared.

Ethylene copolymers generally have no polar groups in the molecule and are inherently non-polar, so that they have insufficient adhesion strength to highly polar materials such as metals and polar resins. For these reasons, when such ethylene copolymers are used by bonding them with the highly polar materials, it is necessary to subject the surface of the ethylene copolymer to, for example, a flame treatment, a corona discharge treatment or a primer treatment, hence resulting in the disadvantage of a complicated operation.

Accordingly, it will also industrially be of great value to provide an ethylene copolymer or an ethylene copolymer composition which has a high melt tension, good heat stability and high mechanical strength and which has a sufficient adhesion strength to highly polar materials.

The present invention seeks to provide an olefin polymerization catalyst which is capable of producing an olefin polymer having excellent transparency, mechanical strength and moldability, in particular an ethylene homopolymer or ethylene/α-olefin copolymer having good moldability which is capable of giving a film having a higher transparency and mechanical strength than films obtained from conventionally known ethylene copolymers.

The present invention provides an olefin polymerization catalyst, comprising a carrier having supported thereon :

(a) an organoaluminium oxy-compound,
(b-I) at least one transition metal compound of the formula [I] :

   ML¹ _{X} [I]

   wherein M is a transition metal atom from Group IVB of the periodic table, the groups L¹ are ligands co-ordinating to the transition metal atom M, at least two of the ligands L¹ are selected from a cyclopentadienyl group, a methylcyclopentadienyl group, an ethylcyclopentadienyl group and a substituted cyclopentadienyl group having at least one substituent group selected from a hydrocarbon group of 3 to 10 carbon atoms, and each of the other ligands L¹ is a hydrocarbon group of 1 to 12 carbon atoms, an alkoxy group, an aryloxy group, a trialkylsilyl group, a halogen atom or a hydrogen atom, and X is a valence of the transition metal atom M, and
(b-II) at least one transition metal compound of the formula [II]:

   ML² _{X} [II]

   wherein M is a transition metal atom from Group IVB of the periodic table, the groups L² are ligands co-ordinating to the transition metal atom, at least two of the ligands L² are substituted cyclopentadienyl groups having 2 to 5 substituent groups selected from a methyl group and an ethyl group, and each of the other ligands L² is a hydrocarbon group of 1 to 12 carbon atoms, an alkoxy group, an aryloxy group, a trialkylsilyl group, a halogen atom or a hydrogen atom, and X is a valence of the transition metal atom M.

The catalyst may further comprise :

(c) an organoaluminium compounds supported on the carrier.

The present invention also provides a prepolymerized olefin polymerization catalyst obtainable by prepolymerizing an olefin on a catalyst as defined above. The catalyst or prepolymerized catalyst may further comprise (d) unsupported organoaluminium compound.

The present invention also provides a process for olefin polymerization, comprising polymerizing an olefin in the presence of an olefin polymerization catalyst as defined above.

By the use of these olefin polymerization catalysts or the processes using these catalysts, an olefin polymer having excellent moldability, transparency and mechanical strength can be prepared.

The olefin may be ethylene or ethylene and an α-olefin of 3 to 20 carbon atoms, the polymer produced having the following properties :
(i) a density of 0.850 to 0.980 g/cm³,
(ii) a melt flow rate (MFR) at 190°C under a load of 2.16 kg of 0.01 to 200 g/10 min,
(iii) the melt tension (MT (g)), measured at a resin temperature of 190°C, an extrusion rate of 15 mm/min and a take-up rate of 10 to 20 m/min using a MT measuring apparatus having a nozzle diameter of 2.09 mm⌀ and a nozzle length of 8 mm, and the melt flow rate (MFR) satisfy the relation${\text{MT > 2.2 x MFR}}^{\text{-0.84}} \text{,}$ and
(iv) the flow index (FI (1/sec)), measured at a resin temperature of 190°C and a shear stress of 5 x 10⁴ to 3 x 10⁶ dyne/cm² using a capillary type flow property tester, using the following nozzle diameters (capillary) depending on the MFR (g/10 min) of the resin:

| | |
|---|---|
| MFR > 20 | 0.5 mm |
| 20 ≥ MFR > 3 | 1.0 mm |
| 3 ≥ MFR > 0.8 | 2.0 mm |
| 0.8 ≥ MFR | 3.0 mm, |

defined by a shear rate which is given when a shear stress of molten copolymer at 190°C reaches 2.4 X 10⁶ dyne/cm² and the melt flow rate (MFR) satisfy the relation$\text{FI < 150 x MFR.}$ The polymer may have the following further properties :
(v) a molecular weight distribution (Mw/Mn) measured by GPC of 1.5 to 4, and
(vi) MT/(Mw/Mn) and FI/MFR satisfy the relation$\text{MT/(Mw/Mn) > 0.03 × FI/MFR - 3.0}$ with the proviso that when the value of 0.03 × FI/MFR - 3.0 is less than 0, it is taken as 0.

These ethylene homopolymers and ethylene/α-olefin copolymers have excellent moldability, and films obtained therefrom have a high mechanical strength and high transparency.

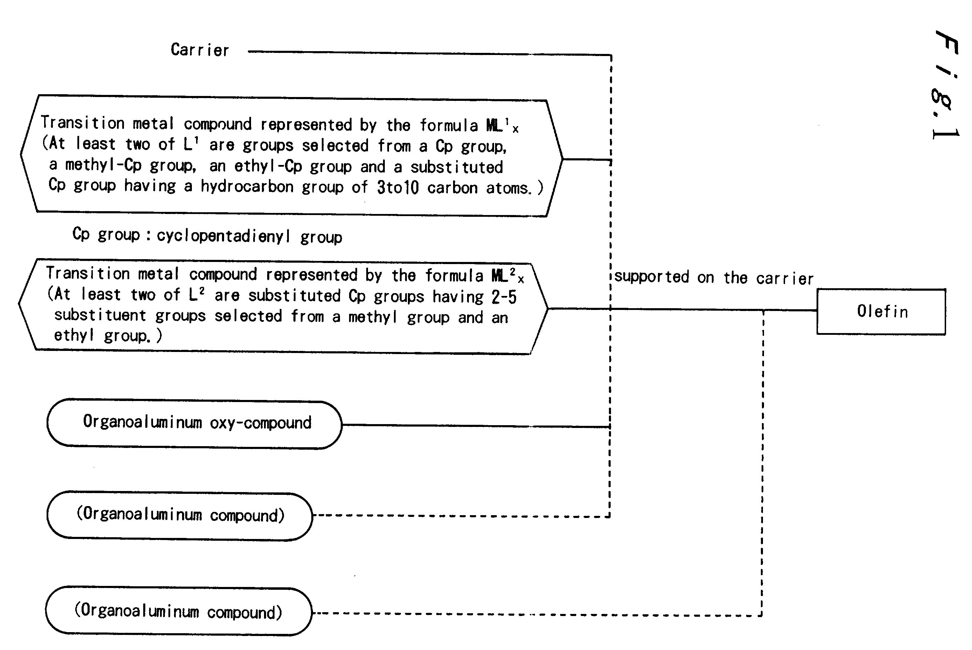

Fig. 1 is an explanatory view of a process for preparing the first to fourth catalysts of the present invention, as defined later.

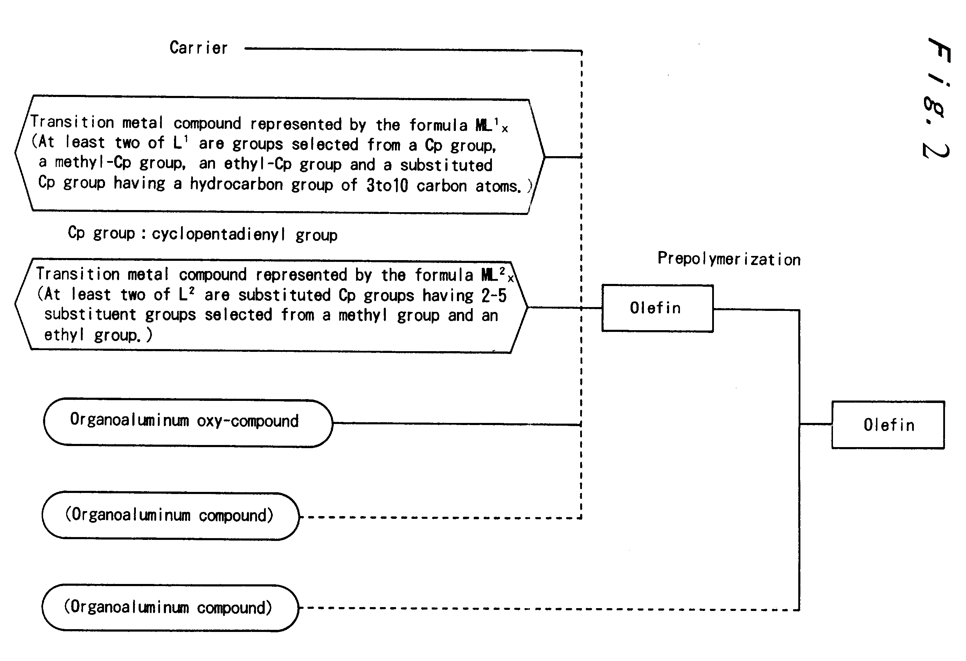

Fig. 2 is an explanatory view of a process for preparing the fifth to eigth catalysts of the present invention, as defined later.

Fig. 3 is a diagram showing the relationship between the melt flow rate (MFR) and melt tension (MT) of an ethylene/α-olefin copolymer of the present invention and a relationship between the MFR and MT of a conventionally known ethylene/α-olefin copolymer.

The present invention will now be described in detail.

In this specification, the term "polymerization" is used to mean not only homopolymerization but also copolymerization, and the term "polymer" is used to mean not only a homopolymer but also a copolymer.

Each catalyst component used in the catalyst of the present invention is explained below.

The organoaluminium oxy-compound (a) [hereinafter sometimes referred to as "component (a)"] may be a known benzene-soluble aluminoxane or the benzene-insoluble organoaluminium oxy-compound disclosed in JP-A-276807/1990.

The above-mentioned aluminoxane may be prepared, for example, by the following procedures:
(1) a procedure for recovering an aluminoxane in the forms of a hydrocarbon solution thereof which comprises adding an organoaluminium compound such as a trialkylaluminium to a suspension in a hydrocarbon medium of a compound containing adsorbed water, or a salt containing water of crystallization such as magnesium chloride hydrate, copper sulfate hydrate, aluminium sulfate hydrate, nickel sulfate hydrate or cerium chloride hydrate, and reacting the organoaluminium compound;
(2) a procedure for recovering an aluminoxane in the form of a hydrocarbon solution thereof which comprises reacting water, ice or steam directly with an organoaluminium compound such as a trialkylaluminium in a solvent such as benzene, toluene, ethyl ether or tetrahydrofuran; and
(3) a procedure for recovering an aluminoxane which comprises reacting an organotinoxide such as dimethyltinoxide or dibutyltinoxide with an organoaluminium compound such as a trialkylaluminium in a solvent such as decane, benzene or toluene.

Moreover, the aluminoxane may contain a small amount of an organometal component. Furthermore, the solvent or unreacted organoaluminium compound may be removed from the above-mentioned recovered aluminoxane-containing solution, by distillation, and the aluminoxane may be redissolved in a solvent.

Examples of the organoaluminium compound used for the preparation of the aluminoxane include:
trialkylaluminiums such as trimethylaluminium, triethylaluminium, tripropylaluminium, triisopropylaluminium, tri-n-butylaluminium, triisobutylaluminium, tri-sec-butylaluminium, tri-tert tri-tert-butylaluminium, tripentylaluminium, trihexylaluminium, trioctylaluminium and tridecylaluminium;
tricycloalkylaluminiums such as tricyclohexylaluminium and tricyclooctylaluminium;
dialkylaluminium halides such as dimethylaluminium chloride, diethylaluminium chloride, diethylaluminium bromide and diisobutylaluminium chloride;
dialkylaluminium hydrides such as diethylaluminium hydride and diisobutylaluminium hydride;
dialkylaluminium alkoxides such as dimethylaluminium methoxide and diethylaluminium ethoxide; and
dialkylaluminium aryloxides such as diethylaluminium phenoxide.

Of these compounds, trialkylaluminiums and tricycloalkylaluminiums are particularly preferable.

Furthermore, there may also be used as the organoaluminium compound an isoprenylaluminium of formula

(i-C₄H₉)ₓAl_{y}(C₅H₁₀)_{z}

wherein x, y and z are each a positive number, and z ≥ 2x.

The organoaluminium compounds mentioned above may be used either singly or in combination.

Solvents used for the solutions of the aluminoxane include aromatic hydrocarbons such as benzene, toluene, xylene, cumene and cymene; aliphatic hydrocarbons such as pentane, hexane, heptane, octane, decane, dodecane, hexadecane and octadecane; alicyclic hydrocarbons such as cyclopentane, cyclohexane, cyclooctane and methylcyclopentane; petroleum fractions such as gasoline, kerosene and gas oil; and halogenated compounds derived from the above-mentioned aromatic hydrocarbons, aliphatic hydrocarbons and alicyclic hydrocarbons, especially chlorinated and brominated hydrocarbons.

In addition, there may also be used ethers such as ethyl ether and tetrahydrofuran. Of the solvents exemplified above, aromatic hydrocarbons are particularly preferred.

The benzene-insoluble organoaluminium oxy-compounds used as component (a) contain an Al component which is soluble in benzene at 60°C in an amount of not greater than 10%, preferably not greater than 5%, particularly preferably not greater than 2%, in terms of Al atoms, and they are insoluble or sparingly soluble in benzene.

The solubility in benzene of the organoaluminium oxy-compounds mentioned above is determined by suspending the organoaluminium oxy-compound, in an amount corresponding to 100 mg atoms in terms of Al, in 100 ml of benzene, mixing the resulting suspension at 60°C for 6 hours with stirring, filtering the resulting mixture with a G-5 glass filter equipped with a jacket kept at 60°C, washing the solid portion separated on the filter with 50 ml of benzene at 60°C four times, and measuring the amount (x mmole) of Al atoms present in the whole filtrate.

Next, the transition metal compound catalyst components (b-I) and (b-II) are explained.

In formula [I], M is a group IV B transition metal atom, especially zirconium, titanium or hafnium, preferably zirconium.

Each ligand L¹ may be the same or different.

The substituted cyclopentadienyl group represented by L¹ may have two or more substituents. Each substituent may be the same or different. When the substituted cyclopentadienyl has two or more substituents, at least one substituent is a hydrocarbon group of 3 to 10 carbon atoms, and the other substituents are selected from a methyl group, an ethyl group and a hydrocarbon group of 3 to 10 carbon atoms.

Examples of the hydrocarbon group of 3 to 10 carbon atoms include an alkyl group, cycloalkyl group, aryl group and aralkyl group. Examples thereof include alkyl groups such as an n-propyl group, isopropyl group, n-butyl group, isobutyl group, sec-butyl group, t-butyl group, pentyl group, hexyl group, octyl group, 2-ethylhexyl group and decyl group; cycloalkyl groups such as a cyclopentyl group and cyclohexyl group; aryl groups such as a phenyl group and tolyl group; and aralkyl groups such as a benzyl group and neophyl group. Of these, preferred are alkyl groups, and particularly preferred are an n-propyl group and n-butyl group.

In the present invention, the (substituted) cyclopentadienyl group co-ordinated to the transition metal is preferably the substituted cyclopentadienyl group, more preferably a cyclopentadienyl group substituted with an alkyl group having 3 or more carbon atoms, even more preferably a substituted cyclopentadienyl group having two substituents, and particularly a 1,3-substituted cyclopentadienyl group.

Examples of the hydrocarbon group of 1 to 12 carbon atoms represented by L¹ include an alkyl group, cycloalkyl group, aryl group and aralkyl group. Examples thereof include alkyl groups such as a methyl group, ethyl group, n-propyl group, isopropyl group, n-butyl group, isobutyl group, sec-butyl group, t-butyl group, pentyl group, hexyl group, octyl group, 2-ethylhexyl group and decyl group; cycloalkyl groups such as a cyclopentyl group and cyclohexyl group; aryl groups such as a phenyl group and tolyl group; and aralkyl groups such as a benzyl group and neophyl group.

Examples of the alkoxy group include a methoxy group, ethoxy group, n-propoxy group, isopropoxy group, n-butoxy group, isobutoxy group, sec-butoxy group, t-butoxy group, pentoxy group, hexoxy group and octoxy group.

Examples of the aryloxy group include a phenoxy group.

Examples of the trialkylsilyl group include a trimethylsilyl group, triethylsilyl group and triphenylsilyl group.

Examples of the halogen atom include fluorine, chlorine, bromine and iodine.

Listed below are examples of the transition metal compound of formula [I].
Bis(cyclopentadienyl)zirconium dichloride,
Bis(methylcyclopentadienyl)zirconium dichloride,
Bis(ethylcyclopentadienyl)zirconium dichloride,
Bis(n-propylcyclopentadienyl)zirconium dichloride,
Bis(n-butylcyclopentadienyl)zirconium dichloride,
Bis(n-hexylcyclopentadienyl)zirconium dichloride,
Bis(methyl-n-propylcyclopentadienyl)zirconium dichloride,
Bis(methyl-n-butylcyclopentadienyl)zirconium dichloride,
Bis(dimethyl-n-butylcyclopentadienyl)zirconium dichloride,
Bis(n-butylcyclopentadienyl)zirconium dibromide,
Bis(n-butylcyclopentadienyl)zirconium methoxychloride,
Bis(n-butylcyclopentadienyl)zirconium ethoxychloride,
Bis(n-butylcyclopentadienyl)zirconium butoxychloride,
Bis(n-butylcyclopentadienyl)zirconium diethoxide,
Bis(n-butylcyclopentadienyl)zirconium methylchloride
Bis(n-butylcyclopentadienyl)zirconium dimethyl,
Bis(n-butylcyclopentadienyl)zirconium benzylchloride,
Bis(n-butylcyclopentadienyl)zirconium dibenzyl,
Bis(n-butylcyclopentadienyl)zirconium phenylchloride, and
Bis(n-butylcyclopentadienyl)zirconium hydride chloride.

In the above exemplified compounds, di-substituted cyclopentadienyl include 1,2- and 1,3-substituted, and trisubstituted include 1,2,3- and 1,2,4-substituted. Also employable in the invention are transition metal compounds obtained by substituting titanium metal or hafnium metal for the zirconium metal in the above-exemplified zirconium compounds.

Of the above-exemplified transition metal compounds of formula [I], particularly preferred are bis(n-propylcyclopentadienyl)zirconium dichloride, bis (n-butylcyclopentadienyl)zirconium dichloride, bis(1-methyl-3-n-propylcyclopentadienyl)zirconium dichloride and bis(1-methyl-3-n-butylcyclopentadienyl)zirconium dichloride.

In formula [II], M is a group IV B transition metal, especially zirconium, titanium or hafnium. Of these, particularly preferred is zirconium.

Each ligand L² may be the same or different. The substituted cyclopentadienyl groups having 2 to 5 substituents represented by L² preferably have 2 or 3 substituents, more preferably two substituents, and is particularly a 1,3-substituted cyclopentadienyl group. Each substituent may be the same or different.

In formula [II], the ligand L² other than the substituted cyclopentadienyl group is a hydrocarbon group of 1 to 12 carbon atoms, an alkoxy group, an aryloxy group, a trialkylsilyl group, a halogen atom or a hydrogen atom, similar to the ligand L¹ in formula [I].

The transition metal compounds of formula [II] include, for example,
Bis(dimethylcyclopentadienyl)zirconium dichloride,
Bis(diethylcyclopentadienyl)zirconium dichloride,
Bis(methylethylcyclopentadienyl)zirconium dichloride,
Bis(dimethylethylcyclopentatienyl)zirconium dichloride,
Bis(dimethylcyclopentadienyl)zirconium dibromide,
Bis(dimethylcyclopentadienyl)zirconium methoxychloride,
Bis(dimethylcyclopentadienyl)zirconium ethoxychloride,
Bis(dimethylcyclopentadienyl)zirconium butoxychloride,
Bis(dimethylcyclopentadienyl)zirconium diethoxide,
Bis(dimethylcyclopentadienyl)zirconium methylchloride,
Bis(dimethylcyclopentadienyl)zirconium dimethyl,
Bis(dimethylcyclopentadienyl)zirconium benzylchloride,
Bis(dimethylcyclopentadienyl)zirconium dibenzyl,
Bis(dimethylcyclopentadienyl)zirconium phenylchloride,
and Bis(dimethylcyclopentadienyl)zirconium hydride chloride.

In the above exemplified compounds, di-substituted cyclopentadienyl include 1,2- and 1,3-substituted, and trisubstituted include 1,2,3- and 1,2,4-substituted.

There may also be used transition metal compounds obtained by substituting titanium or hafnium for zirconium in the above-exemplified zirconium compounds.

Of the above-mentioned transition metal compounds of formula [II], particularly preferred is
Bis(1,3-dimethylcyclopentadienyl)zirconium dichloride,
Bis(1,3-diethylcyclopentadienyl)zirconium dichloride, or
Bis(1-methyl-3-ethylcyclopentadienyl)zirconium dichloride.

In the invention, it is preferred to use a combination of bis(1,3-n-butylmethylcyclopentadienyl)zirconium dichloride and bis(1,3-dimethylcyclopentadienyl)zirconium dichloride, a combination of bis(1,3-n-propylmethylcyclopentadienyl)zirconium dichloride and bis(1,3-dimethylcyclopentadienyl)zirconium dichloride, and a combination of bis(n-butylcyclopentadienyl)zirconium dichloride and bis(1,3-dimethylcyclopentadienyl)zirconium dichloride, as component (b).

The transition metal compounds (b-I) and (b-II) are desirably used in amounts such that the molar ratio [(b-I):(b-II)] is 99:1 to 50:50, preferably 97:3 to 70:30, more preferably 95:5 to 75:25, most preferably 90:10 to 80:20.

The transition metal compound catalyst component containing at least one transition metal compound (b-I) of formula [I] and at least one transition metal compound (b-II) of formula [II] is sometimes referred to as "component (b)".

Examples of the organoaluminium compound (c) [hereinafter sometimes referred to as "component (c)"] include an organoaluminium compound of formula [III].

R¹ ₙAlX₃₋ₙ [III]

wherein R¹ is a hydrocarbon group of 1 to 12 carbon atoms, X is a halogen atom or a hydrogen atom, and n is 1 to 3.

In formula [III], R¹ is for example, an alkyl group, a cycloalkyl group or an aryl group. Examples of R¹ include methyl, ethyl, n-propyl, isopropyl, isobutyl, pentyl, hexyl, octyl, cyclopentyl, cyclohexyl, phenyl and tolyl.

Examples of organoaluminium compounds (c) include
trialkylaluminiums such as trimethylaluminium, triethylaluminium, triisopropylaluminium, triisobutylaluminium, trioctylaluminium and tri-2-ethylhexylaluminium;
alkenylaluminiums such as isoprenylaluminium;
dialkylaluminium halides such as dimethylaluminium chloride, diethylaluminium chloride, diisopropylaluminium chloride, diisobutylaluminium chloride and dimethylaluminium bromide;
alkylaluminium sesquihalides such as methylaluminium sesquichloride, ethylaluminium sesquichloride, isopropylaluminium sesquichloride, butylaluminium sesquichloride and ethylaluminium sesquibromide;
alkylaluminium dihalides such as methylaluminium dichloride, ethylaluminium dichloride, isopropylaluminium dichloride and ethylaluminium dibromide; and
alkylaluminium hydrides such as diethylaluminium hydride and diisobutylaluminium hydride.

Furthermore, there may also be used organoaluminium compounds of formula [IV]:

R¹ ₙAlY₃₋ₙ [IV]

wherein R¹ is as defined above Y is -OR², -OSiR³₃, -OAlR⁴₂, -NR⁵₂, -SiR⁶₃ or -N(R⁷)AlR⁸₂, n is 1 to 2, R², R³, R⁴ and R⁸ are each methyl, ethyl, isopropyl, isobutyl, cyclohexyl or phenyl, R⁵ is hydrogen, methyl, ethyl, isopropyl, phenyl or trimethylsilyl, and R⁶ and R⁷ are each methyl or ethyl.

The organoaluminium compounds mentioned above include the compounds enumerated below:
(1) Compounds of formula R¹ₙAl (OR²)₃₋ₙ such as dimethylaluminium methoxide, diethylaluminium ethoxide and diisobutylaluminium methoxide.
(2) Compounds of formula R¹ₙAl(OSiR³₃)₃₋ₙ such as Et₂Al(OSiMe₃), (iso-Bu)₂Al(OSiMe₃) and (iso-Bu)₂Al(OSiEt₃).
(3) Compounds of formula R¹ₙAl(OAlR⁴₂)₃₋ₙ such as Et₂AlOAlEt₂ and (iso-Bu)₂AlOAl(iso-Bu)₂.
(4) Compounds of formula R¹ₙAl(NR⁵₂)₃₋ₙ such as Me₂AlNEt₂, Et₂AlNHMe, Me₂AlNHEt, Et₂AlN(SiMe₃)₂, (iso-Bu)₂AlN(SiMe₃)₂.
(5) Compounds of formula R¹ₙAl(SiR⁶₃)₃₋ₙ such as (iso-Bu)₂AlSiMe₃.
(6) Compounds of formula 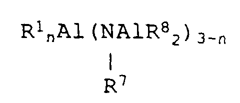 such as

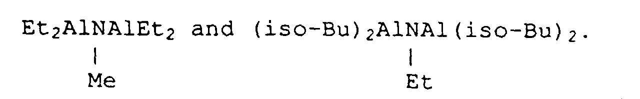

Of the organoaluminium compounds exemplified above, preferred are those having the formulae:

R¹ ₃Al, R¹ ₙAl (OR²)₃₋ₙ and R¹ ₙAl (OAlR⁴ ₂)₃₋ₙ,

and particularly preferred are those having the above-mentioned formulae in which R is isoalkyl and n is 2.

The unsupported organoaluminium compound [hereinafter sometimes referred to as "component (d)"] used in the present invention is the same as component (c).

The carrier used in the present invention is a solid inorganic or organic compound in the form of granules or fine particles having a particle size of 10 to 300 µm, preferably 20 to 200 µm. Of these carriers, porous oxides are preferable as inorganic carriers. Examples of the oxide carriers include SiO₂, Al₂O₃, MgO, ZrO₂, TiO₂, B₂O₃, CaO, ZnO, BaO, ThO₂, or a mixture of these compounds such as SiO₂-MgO, SiO₂-Al₂O₃, SiO₂-TiO₂, SiO₂-V₂O₅, SiO₂-Cr₂O₃ and SiO₂-TiO₂-MgO. Of these carriers, preferred are those comprising at least one of SiO₂ and Al₂O₃ as a major component.

Furthermore, the above-mentioned inorganic oxide or oxides may also contain a small amount of a carbonate, a sulfate, a nitrate and an oxide such as Na₂CO₃, K₂CO₃, CaCO₃, MgCO₃, Na₂SO₄, Al₂(SO₄)₃, BaSO₄, KNO₃, Mg(NO₃)₂, Al(NO₃)₃, Na₂O, K₂O and LiO₂.

Though the carriers have different properties depending on the type and preparation methods thereof, the carriers preferably used in the invention have a specific surface area of 50 to 1000 m²/g, more preferably 100 to 700 m²/g, and desirably a pore volume of 0.3 to 2.5 cm³/g. The carriers are prepared if necessary by firing at a temperature of 100 to 1000°C, preferably 150 to 700°C.

It is also desirable that the carrier has an amount of adsorbed water of less than 1.0% by weight, preferably less than 0.5% by weight, and surface hydroxyl groups in an amount of 1.0% by weight or more, preferably 1.5 to 4.0% by weight and especially 2.0 to 3.5% by weight.

The amounts of adsorbed water (% by weight) and surface hydroxyl groups (% by weight) are obtained by the following procedures:

### (Amount of adsorbed water)

The specimen is dried at a temperature of 200°C, an ordinary pressure and in a nitrogen stream for 4 hours to measure the weight loss, which is taken as the amount of adsorbed water.

### (Surface hydroxyl groups)

The weight measured after drying the carrier at a temperature of 200°C, an ordinary pressure and in a nitrogen stream for 4 hours is taken as X (g). The dried carrier is then calcined at a temperature of 1,000°C for 20 hours to obtain a calcined product from which the surface hydroxyl groups have disappeared. The weight of the calcination product is taken as Y (g). The amount of the surface hydroxyl groups is calculated using the following equation:$\text{Surface hydroxyl groups (wt %) = [(X-Y)/X) x 100}$

Moreover, the carrier can be an organic compound in the form of solid granules or fine solid particles each having a particle size of 10 to 300 µm. Examples of these organic compounds include (co)polymers containing as the main component units derived from an α-olefin of 2 to 14 carbon atoms, such as ethylene, propylene, 1-butene and 4-methyl-1-pentene, or polymers or copolymers containing as the main component units derived from vinylcyclohexane or styrene.

A first catalyst of the invention is a solid catalyst (component) in which component (a) (organoaluminium oxy-compound) and component (b) (at least two transition metal compounds) are supported on a carrier.

A second catalyst of the invention is formed from a solid catalyst component (C-1) in which components (a) and (b) are supported on a carrier, and component (d) (an organoaluminium compound).

A third catalyst of the invention is a solid catalyst (component) in which components (a), (b) and (c) (an organoaluminium compound) are supported on a carrier.

A fourth catalyst of the invention is formed from a solid catalyst component (C-2) in which components (a), (b) and (c) are supported on a carrier, and component (d).

The first catalyst (solid catalyst component (C-1)) of the invention can be prepared by contacting components (a) and (b) with the carrier.

The third catalyst (solid catalyst component (C-2)) of the invention can be prepared by contacting components (a), (b) and (c) with the carrier.

In the preparation of the first catalyst, the contact between the carrier, component (a) and component (b) may be conducted in an arbitrarily selected order, but it is preferred to contact the carrier with component (a), followed by contacting component (b).

In the preparation of the third catalyst, the contact between the carrier and components (a) to (c) may be conducted in an arbitrarily selected order, but it is preferred to contact the carrier with component (a) and then with component (b), followed by contacting component (c) .

Further, it is preferred that at least two transition metal compounds are beforehand mixed to form component (b) and then component (b) is contacted with the other components.

The contact of the carrier with components (a) to (c) can be carried out in an inert hydrocarbon solvent. Examples of the inert hydrocarbon solvent are aliphatic hydrocarbons, such as propane, butane, pentane, hexane, heptane, octane, decane, dodecane and keosine; alicyclic hydrocarbons, such as cyclopentane, cyclohexane and methylcyclopentane; aromatic hydrocarbons, such as benzene, toluene and xylene; halogenated hydrocarbons, such as ethylene chloride, chlorobenzene and dichloromethane; and mixtures thereof.

In the contact of the carrier with components (a) and (b) or in the contact of the carrier with components (a) to (c), component (b) is usually used in an amount of 5 x 10⁻⁶ to 5 x 10⁻⁴ mol, preferably 10⁻⁵ to 2 x 10⁻⁴ mol, per 1 g of the carrier, and the concentration of component (b) is 10⁻⁴ to 2 x 10⁻² mol/l (solvent), preferably 2 x 10⁻⁴ to 10⁻² mol/l (solvent). The atomic ratio (Al:transition metal) of the aluminium atoms (Al) in component (a) to the transition metal in component (b) is usually 10:1 to 500:1, preferably 20:1 to 200:1. The atomic ratio (Al-c/Al-a) of the aluminium atoms (Al-c) in component (c) to the aluminium atoms (Al-a) in component (a) is usually 0.02:1 to 3:1, preferably 0.05:1 to 1.5:1. The temperature for contacting the carrier with components (a) and (b) or contacting the carrier with components (a) to (c) is usually -50 to 150°C, preferably -20 to 120°C, and the period of time thereof is 1 minute to 50 hours, preferably 10 minutes to 25 hours.

In the first catalyst, the transition metal atoms derived from component (b) are desirably supported in an amount of 5 × 10⁻⁶ to 5 × 10⁻⁴ g·atom, preferably 10⁻⁵ to 2 × 10⁻⁴ g·atom, per 1 g of carrier, and the aluminium atoms derived from component (a) are desirably supported in an amount of 10⁻³ to 5 × 10⁻² g·atom, preferably 2 × 10⁻³ to 2 × 10⁻² g·atom, per 1 g of the carrier.

The second catalyst is formed from the above-mentioned solid catalyst component (C-1) and the organoaluminium compound (d). Component (d) is desirably employed in an amount such that the atomic ratio (Al:M) of the aluminium atoms derived from component (d) to the transition metal atoms (M) derived from the transition metal compound in the solid catalyst component (C-1) is 5:1 to 300:1, preferably 10:1 to 200:1, more preferably 15:1 to 150:1.

In the third catalyst, the transition metal atoms derived from the component (b) are desirably supported in an amount of 5 × 10⁻⁶ to 5 × 10⁻⁴ g·atom, preferably 10⁻⁵ to 2 × 10⁻⁴ g·atom, per 1 g of the carrier, and the aluminium atoms derived from components (a) and (c) are desirably supported in an amount of 10⁻³ to 5 × 10⁻² g·atom, preferably 2 × 10⁻³ to 2 × 10⁻² g·atom, per 1 g of the carrier.

The fouth catalyst is formed from the above-mentioned solid catalyst component (C-2) and the organoaluminium compound (d). Component (d) is desirably employed in an amout such that the atomic ratio (Al:M) of the aluminium atoms derived from component (d) to the transition metal atoms (M) derived from the transition metal compound in the solid catalyst component (C-2) is 5:1 to 300:1, preferably 10:1 to 200:1, more preferably 15:1 to 150:1.

A fifth catalyst of the invention is a prepolymerized catalyst (component) obtained by prepolymerizing an olefin on the solid catalyst component (C-1) in which components (a) and (b) are supported on the carrier.

A sixth catalyst of the invention is formed from a prepolymerized catalyst component (C-3) obtained by prepolymerizing an olefin on the solid catalyst component (C-1), and component (d) (organoaluminium compound).

A seventh catalyst of the invention is a prepolymerized catalyst (component) obtained by prepolymerizing an olefin on the solid catalyst component (C-2) in which components (a), (b) and (c) (organoaluminium compound) are supported on the carrier.

An eigth catalyst of the invention is formed from a prepolymerized catalyst component (C-4) obtained by prepolymerizing an olefin on the solid catalyst component (C-2), and component (d) (organoaluminium compound).

The fifth catalyst (prepolymerized catalyst component (c-3)) can be prepared by introducing an olefin into an inert hydrocarbon solvent in the presence of the carrier, component (a) and component (b) to perform a prepolymerization. The carrier, component (a) and component (b) preferably form the above-mentioned solid catalyst component (C-1). In this case, component (a) or component (c) may be further added in addition to the solid catalyst component (C-1).

The seventh catalyst (prepolymerized catalyst component (C-4)) can be prepared by introducing an olefin into an inert hydrocarbon solvent in the presence of the carrier and components (a) to (c) to preform a prepolymerization. The carrier and components (a) to (c) preferably form the above-mentioned solid catalyst component (C-2). In this case, component (a) or component (c) may be further added in addition to the solid catalyst component (C-2).

Examples of the olefins used for the prepolymerization include ethylene, and α-olefins having 3 to 20 carbon atoms such as propylene, 1-butene, 1-pentene, 4-methyl-1-pentene, 1-hexene, 1-octene, 1-decene, 1-dodecene and 1-tetradecene. Of these, particularly preferred is ethylene or a combination of ethylene and the same α-olefin as used for the polymerization.

Examples of the inert hydrocarbon solvent used herein are the same as those used for preparing the aforementioned solid catalyst component.

In the prepolymerization, component (b) is usually used in an amount of 10⁻⁶ to 2 × 10⁻² mol/l (solvent), preferably 5 × 10⁻⁵ to 10⁻² mol/l (solvent), in terms of transition metal atoms in component (b) . Further, component (b) is usually used in an amount of 5 × 10⁻⁶ to 5 × 10⁻⁴ mol, preferably 10⁻⁵ to 2 × 10⁻⁴ mol, in terms of transition metal atoms in component (b), per 1 g of the carrier. The atomic ratio (Al:transition metal) of the aluminium atoms (Al) in component (a) to the transition metal in component (b) is usually 10:1 to 500:1, preferably 20:1 to 200:1. The atomic ratio (Al-c:Al-a) of the aluminium atoms (Al-c) in component (c) to the aluminium atom (Al-a) in component (a) is usually 0.02:1 to 3:1, preferably 0.05:1 to 1.5:1.

The temperature for the prepolymerization is -20 to 80 °C, preferably 0 to 60 °C, and the period of time therefor is 0.5 to 100 hours, preferably 1 to 50 hours.

The prepolymerization may be carried out either batchwise or continuously, and may be carried out under reduced pressure, atmospheric pressure or application of pressure. In the prepolymerization, hydrogen is desirably present to obtain a prepolymer having an intrinsic viscosity [η], as measured in decalin at 135 °C, of 0.2 to 7 dl/g, preferably 0.5 to 5 dl/g.

The catalyst for olefin polymerization according to the invention can be prepared, for example, in the following manner. First, the carrier is suspended in an inert hydrocarbon to give a suspension. To the suspension is added the organoaluminium oxy-compound (component (a)) to perform a reaction for a predetermined time. Then, the supernatant liquid is removed, and the resultant solid component is again suspended in an inert hydrocarbon. Subsequentlv, to the system are added the transition metal compounds (component (b)) to perform a reaction for a predetermined time. The supernatant liquid is removed again to obtain a solid catalyst component. The solid catalyst component thus obtained is added to an inert hydrocarbon containing the organoaluminium compound (component (c)), followed by introducing an olefin, to obtain a prepolymerized catalyst (component).

In the fifth catalyst it is desired that a prepolymer is prepared in an amount of 0.1 to 500 g, preferably 0.2 to 300 g, more preferably 0.5 to 200 g, per 1 g of the carrier; the component (b) is supported in an amount of 5 × 10⁻⁶ to 5 × 10⁻⁴ g·atom, preferably 10⁻⁵ to 2 × 10⁻⁴ g·atom, in terms of the transition metal atoms in component (b), per 1 g of the carrier; and the aluminium atoms (Al) derived from component (a) are supported in an amount such that the molar ratio (Al:M) of the aluminium atoms (Al) derived from component (a) to the transition metal atoms (M) derived from component (b) is 5:1 to 200:1, preferably 10:1 to 150:1.

The sixth catalyst is formed from the above-mentioned prepolymerized catalyst component (C-3) and the organoaluminium compound (d). Component (d) is desirably employed in an amount such that the molar ratio (Al:M) of the aluminium atoms (Al) derived from component (d) to the transition metal atoms (M) derived from component (b) in the prepolymerized catalyst component (C-3) is 5:1 to 300:1, preferably 10:1 to 200:1, more preferably 15:1 to 150:1.

In the seventh catalyst it is desired that a prepolymer is prepared in an amount of 0.1 to 500 g, preferably 0.2 to 300 g, more preferably 0.5 to 200 g, per 1 g of the carrier; component (b) is supported in an amount of 5 × 10⁻⁶ to 5 × 10⁻⁴ g·atom, preferably 10⁻⁵ to 2 × 10⁻⁴ g·atom, in terms of transition metal atoms in component (b), per 1 g of the carrier; and the aluminium atoms (Al) derived from components (a) and (c) are supported in an amount such that the molar ratio (Al:M) of the aluminium atoms (Al) derived from components (a) and (c) to the transition metal atoms (M) derived from component (b) is 5:1 to 200:1, preferably 10:1 to 150:1.

The eigth catalyst is formed from the above-mentioned prepolymerized catalyst component (C-4) and the organoaluminium compound (d). Component (d) is desirably employed in an amount such that the molar ratio (Al:M) of the aluminium atoms (Al) derived from component (d) to the transition metal atoms (M) derived from component (b) in the prepolymerized catalyst component (C-4) is 5:1 to 300:1, preferably 10:1 to 200:1, more preferably 15:1 to 150:1.

In the present invention, homopolymerization or copolymerization of an olefin is carried out in the presence of any of the first to eigth catalysts in either a gas phase or a liquid phase such as a slurry. In the slurry polymerization, an inert hydrocarbon may be used as a solvent, or the olefin itself may be used as a solvent.

Examples of the inert hydrocarbon solvent used in the slurry polymerization include aliphatic hydrocarbons, such as propane, butane, isobutane, pentane, hexane, octane, decane, dodecane, hexadecane and octadecane; alicyclic hydrocarbons, such as cyclopentane, methylcyclopentane, cyclohexane and cyclooctane; aromatic hydrocarbons, such as benzene, toluene and xylene; and petroleum fractions, such as gasoline, kerosine and gas oil. Of these, preferred are aliphatic hydrocarbons, alicyclic hydrocarbons and petroleum fractions.

In the slurry polymerization or the gas phase polymerization, the above-mentioned catalyst is usually used in an amount such that the concentration of the transition metal atoms in the polymerization reaction system is 10⁻⁸ to 10⁻³ g·atom/l, preferably 10⁻⁷ to 10⁻⁴ g·atom/l. In the polymerization, an unsupported organoaluminium oxy-compound may be used in addition to the organoaluminium oxy-compound supported on the carrier. In this case, the atomic ratio (Al:M) of the aluminuim atoms (Al) derived from the unsupported aluminium oxy-compound to the transition metal atoms (M) derived from the transition metal compounds (b-I) and (b-II) is 5:1 to 300:1, preferably 10:1 to 200:1, more preferably 15:1 to 150:1.

In the invention, the temperature for the slurry polymerization is usually -50 to 100 °C, preferably 0 to 90 °C, while the temperature for the gas phase polymerization is usually 0 to 120 °C, preferably 20 to 100 °C.

The polymerization pressure is usually atmospheric pressure to 100 kg/cm², preferably 2 to 50 kg/cm². The polymerization may be carried out batchwise, semi-continuously or continuously.

Further, the polymerization may be conducted in two or more stages having different reaction conditions.

The catalyst of the invention may contain components useful for the olefin polymerization other than the above-mentioned components.

Examples of olefins polymerizable in the presence of the catalyst of the invention include:
ethylene, and α-olefins of 3 to 20 carbon atoms such as propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene; and
cycloolefins of 3 to 20 carbon atoms, such as cyclopentene, cycloheptene, norbornene, 5-methyl-2-norbornene, tetracyclododecene, 2-methyl-1,4,5,8-dimethano-1,2,3,4,4a,5,8,8a-octahydronaphthalene.

Also employable are styrene, vinylcyclohexane and dienes.

The catalyst and process of the invention are especially suitably used for the copolymerization of ethylene with an α-olefin of 3 to 20 carbon atoms.

An ethylene homopolymer or ethylene/α-olefin copolymer which can be produced by the process of the present invention will now be described in detail.

The ethylene/α-olefin copolymers can be prepared by copolymerizing ethylene with an α-olefin of 3 to 20 carbon atoms in the presence of the catalyst of the present invention in such a manner that the resultant copolymer has a density of 0.850 to 0.980 g/cm³.

When the copolymerization of ethylene with an α-olefin of 3 to 20 carbon atoms is carried out in the presence of the aforementioned catalyst formed from the organoaluminium oxy-compound (a), at least two transition metal compounds (b), the carrier, and if necessary the organoaluminium compound (c), the ethylene/α-olefin copolymer can be prepared with high polymerizability.

The ethylene/α-olefin copolymers are random copolymers of ethylene with an α-olefin of 3 to 20 carbon atoms. Examples of the α-olefin of 3 to 20 carbon atoms include propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene.

It is desired that the units derived from ethylene in the homopolymer or copolymer are present in an amount of 50 to 100 % by weight, preferably 55 to 99 % by weight, more preferably 65 to 98 % by weight, most preferably 70 to 96 % by weight, and the units derived from an α-olefin of 3 to 20 carbon atoms are present in an amount of 0 to 50 % by weight, preferably 1 to 45 % by weight, more preferably 2 to 35 % by weight, most preferably 4 to 30 % by weight.

The composition of the ethylene/α-olefin copolymer is generally determined by ¹³C-NMR spectrum analysis of a sample prepared by homogeneously dissolving about 200 mg of the copolymer in 1 ml of hexachlorobutadiene in a sample tube having a diameter of 10 mm under the conditions of a measuring temperature of 120 °C, a measuring frequency of 25.05 MHz, a spectrum width of 1,500 Hz, a pulse repetition period of 4.2 s and a pulse width of 6 µs.

The ethylene homopolymer or ethylene/α-olefin copolymer (first polymer) has the following properties (i) to (iv), and preferably has the following properties (i) to (ix). The ethylene homopolymer or ethylene/α-olefin copolymer (second polymer) of has the following properties (i) to (vi), and preferably has the following properties (i) to (ix):

(i) The density (d) is 0.850 to 0.980 g/cm³, preferably 0.880 to 0.960 g/cm³, more preferably 0.890 to 0.935 g/cm³, most preferably 0.905 to 0.930 g/cm³.

The density (d) is determined by a density gradient tube using a strand, which has been obtained at the time of measurement of a melt flow rate (MFR) at 190 °C under a load of 2.16 kg and which is treated by heating at 120 °C for 1 hour and slowly cooling to room temperature over 1 hour.

(ii) The melt flow rate (MFR) is 0.01 to 200 g/10 min, preferably 0.05 to 50 g/10 min, more preferably 0.1 to 10 g/10 min.

The melt flow rate (MFR) is determined in accordance with ASTM D1238-65T under the conditions of a temperature of 190°C and a load of 2.16 kg.

(iii) The melt tension (MT (g)) and the melt flow rate (MFR) satisfy the relation:${\text{MT > 2.2 × MFR}}^{\text{-0.84,}}$ preferably 8.0 × MFR^{-0.84} > MT > 2.3 × MFR^{-0.84},
more preferably 7.5 × MFR^{-0.84} > MT > 2.5 × MFR^{-0.84},

An ethylene homopolymer or ethylene/α-olefin copolymer having such properties has good moldability because of the high melt tension (MT).

The melt tension (MT (g)) is determined by measuring the stress given when a molten copolymer is stretched at a constant rate. That is, a powdery polymer is melted in a conventional manner, and the molten polymer is pelletized to give a measuring sample. Then, the MT of the sample is measured under the conditions of a resin temperature of 190 °C, an extrusion rate of 15 mm/min and a take-up rate of 10 to 20 m/min using a MT measuring apparatus (produced by Toyo Seiki Seisakusho K.K.) having a nozzle diameter of 2.09 mmφ and a nozzle length of 8 mm. During the pelletization, to the ethylene homopolymer or ethylene/α-olefin copolymer are added 0.05 % by weight of tri(2,4-di-t-butylphenyl)phosphate as a secondary antioxidant, 0.1 % by weight of n-octadecyl-3-(4'-hydroxy-3',5'-di-t-butylphenyl)propionate as a heat stabilizer and 0.05 % by weight of calcium stearate as a hydrochloric acid absorbent.

(iv) The flow index (FI (l/sec)) defined by a shear rate which is given when a shear stress of a molten copolymer at 190 °C reaches 2.4 x 10⁶ dyne/cm² and the melt flow rate (MFR) satisfy the relation:$\text{FI < 150 × MFR,}$ preferably FI < 140 × MFR,
more preferably FI < 130 × MFR.

The flow index (FI) is determined by extruding a resin from a capillary while changing the shear rate and measuring the shear rate given when the shear stress reaches the above-mentioned value. In this measurement, the same sample as described in the above-mentioned MT measurement is used, and the FI is measured under the conditions of a resin temperature of 190 °C and a shear stress of 5 × 10⁴ to 3 × 10⁶ dyne/cm² using a capillary type flow property tester produced by Toyo Seiki Seisakusho K.K.

In the measurement, the diameter of the nozzle (capillary) used depends on the MFR (g/10 min) of the resin to be measured, and is as follows:

| | |
|---|---|
| in the case of MFR > 20 | 0.5 mm |
| in the case of 20 ≥ MFR > 3 | 1.0 mm |
| in the case of 3 ≥ MFR > 0.8 | 2.0 mm, and |
| in the case of 0.8 ≥ MFR | 3.0 mm |

(v) The molecular weight distribution (Mw/Mn, Mw: weight-average molecular weight, Mn: number-average molecular weight) measured by GPC is 1.5 to 4.

The molecular weight distribution (Mw/Mn) is measured in the following manner using a GPC-150C measuring device produced by Millipore Co.

The measurement is carried out using a column of TSK-GNH-HT having a diameter of 72 mm and a length of 600 mm at a column temperature of 140 °C. In this measurement, 500 microliters of a sample having a concentration of 0.1 % by weight is introduced into the column in which o-dichlorobenzene (available from Wako Junyaku Kogyo K.K.) as a mobile phase is moved at a rate of 1.0 ml/min. In the mobile phase, 0.025 % by weight of BHT (available from Takeda Chemical Industries, Ltd.) is contained as an antioxidant. A differential refractometer is used as a detector. Standard polystyrenes of Mw < 1,000 and Mw > 4 × 10⁶ from Toso Co. and standard polystyrenes of 1,000 < Mw < 4 × 10⁶ from Pressure Chemical Co. are used.

(vi) MT/(Mw/Mn) and FI/MFR satisfy the relation:$\text{MT/(Mw/Mn) > 0.03 × FI/MFR - 3.0}$ with the proviso that when the value of 0.03 × FI/MFR - 3.0 is less than 0, it is taken as 0,
preferably$\text{0.03 × FI/MFR + 1.0 > MT/(Mw/Mn) > 0.03 × FI/MFR - 2.8}$ with the proviso that when the value of 0.03 × FI/MFR - 2.8 is less than 0, it is taken as 0,
more preferably$\text{0.03 × FI/MFR + 0.8 > MT/(Mw/Mn) > 0.03 × FI/MFR - 2.5}$ with the proviso that when the value of 0.03 × FI/MFR - 2.5 is less than 0, it is taken as 0.

With an increase of the value of Mw/Mn, the value of MT becomes large, so that an index of MT/(Mw/Mn) is used to reduce the influence of the Mw/Mn value on the value of MT. Likewise, with an increase of the value of MFR, the value of FI becomes large, so that an index of FI/MFR is used in order to reduce the influence of the MFR value on the value of FI.

(vii) The temperature (Tm (°C)) at which the endothermic curve of the homopolymer or copolymer measured by a differential scanning calorimeter (DSC) shows the maximum peak and the density (d) satisfy the relation:$\text{Tm < 400 × d - 250,}$ preferably Tm < 450 × d - 297,
more preferably Tm < 500 × d - 344,
particularly preferably Tm < 550 × d - 391.

The temperature (Tm (°C)) at which the endothermic curve of an ethylene homopolymer or ethylene/α-olefin copolymer measured by a differential scanning calorimeter (DSC) shows the maximum peak is determined from an endothermic curve obtained by filling about 5 mg of a sample in an aluminium pan, heating to 200 °C at a rate of 10 °C/min, holding the sample at 200 °C for 5 minutes, lowering the temperature to room temperature at a rate of 20 °C/min and then heating at a rate of 10 °C/min. This measurement is carried out using a DSC-7 type apparatus produced by Perkin Elmer Co.

(viii) The quantity fraction (W (% by weight)) of a n-decane-soluble component at 23 °C and the density (d) satisfy the relation:
in the case of MFR ≤ 10 g/10 min:$\text{W < 80 × exp(-100(d-0.88)) + 0.1,}$
preferably W < 60 × exp(-100(d-0.88)) + 0.1,
more preferably W < 40 × exp(-100(d-0.88)) + 0.1, and in the case of MFR > 10 g/10 min:${\text{W < 80 × (MFR-9)}}^{\text{0.26}} \text{× exp(-100(d-0.88)) + 0.1.}$

The measurement of the n-decane-soluble component quantity of an ethylene homopolymer or ethylene/α-olefin copolymer (a polymer having a smaller soluble component quantity has a narrower composition distribution) is carried out by adding about 3 g of the polymer to 450 ml of n-decane, dissolving the polymer at 145 °C, cooling the resultant solution to 23 °C, removing the n-decane-insoluble portion by filtration, and recovering the n-decane-soluble portion from the filtrate.

It may be concluded that the ethylene homopolymer or ethylene/α-olefin copolymer which satisfies the above-mentioned relation between the temperature (Tm) at which the endothermic curve measured by a differential scanning calorimeter (DSC) shows the maximum peak and the density (d), and the relation between the quantity fraction (W) of the n-decane-soluble component and the density (d), has a narrow composition distribution.

(ix) The number of unsaturated bonds in the molecule is not more than 0.5 per 1,000 carbon atoms and is less than 1 per 1 molecule of the polymer.

The determination of the unsaturated bonds is made by ¹³C-NMR spectrum analysis. In detail, an area intensity of signals given by a carbon atom forming a bond other than a double bond, namely, an area intensity of signals in the range of 10 to 50 ppm, and an area intensity of signals given by a carbon atom forming a double bond, namely, an area intensity of signals in the range of 105 to 150 ppm, are determined from the integral curve. From the ratio therebetween the number of the unsaturated bonds is determined.

The first and second ethylene homopolymer or ethylene/α-olefin copolymers may contain various additives if desired, for example, a weathering stabilizer, heat stabilizer, antistatic agent, anti-slip agent, antiblocking agent, anti-fogging agent, lubricant, pigment, dye, nucleating agent, plasticizer, anti-aging agent, hydrochloric acid absorbent or antioxidant, provided that the object of the invention is not marred.

The first and second ethylene homopolymers and copolymers may be processed by a conventional molding method, for example, an air-cooling inflation molding, two-stage air-cooling inflation molding, high-speed inflation molding, T-die film molding and water-cooling inflation molding, to obtain films. The films thus obtained have excellent transparency and mechanical strength, and retain the properties inherent in general LLDPE, such as heat-sealing properties, hot-tack properties, heat resistance and blocking resistance. Further, the films are free from surface stickiness because the ethylene/α-olefin copolymers have a prominently narrow composition distribution. Moreover, because of their high melt tension, the ethylene homopolymers and ethylene/α-olefin copolymers have good bubble stability in the inflation molding stage.

The films obtained from the first and second polymers are suitable for various packaging bags such as standard bags, sugar bags, packaging bags for oily goods and packaging bags for moist goods, and agricultural materials. The films may also be used as multi-layer films by laminating them on various substrates such as a nylon substrate and a polyester substrate.

The polymers obtained by the process of the present invention may be formed into a film or a molded article.

By the use of the catalyst or process of the present invention, an olefin polymer having a high melt tension and good moldability can be prepared. From such an olefin polymer, a film of high transparency and high mechanical strength can be produced.

The ethylene homopolymer or ethylene/α-olefin copolymer produced by the process of the present invention has a high melt tension and good moldability. From such an ethylene homopolymer or ethylene/α-olefin copolymer, a film of high transparency and high mechanical strength can be produced.

The present invention is further described below in the Examples.

The physical properties of films were evaluated in the following manner:

### Haze

The haze was measured in accordance with ASTM-D-1003-61.

### Gloss

The gloss was measured in accordance with JIS Z8741.

### Film impact

The film impact was measured by a pendulum type film impact tester produced by Toyo Seiki Seisakusho K.K.

### Adhesion strength

A pressed sheet of a modified copolymer having a thickness of 100 µm was used as a sample. The sample was heat sealed with two kinds of adherends and the peel strength was measured to evaluate the adhesion strength. One adherend was an aluminium foil having a thickness of 0.5 mm, and the other adherend was a 6-nylon sheet having a thickness of 1.0 mm. The heat sealing of the pressed sheet with the adherend was conducted using a heat sealer under the conditions of a temperature of 200 °C, a load of 1 kg/cm² and a period of 60 s. After the heat sealing, the pressed sheet with the adherend was cut to give a specimen having a width of 25 mm and a length of 150 mm. The adhesion strength of the specimen was measured by peeling the adherend layer in the direction of 180° against the modified polymer layer at a peel rate of 200 mm/min.

### Example 1

5.0 kg of silica, having been dried at 250 °C for 10 hours, was suspended in 80 liters of toluene, and the resultant suspension was cooled to 0 °C. Thereafter, to the suspension was dropwise added 28.7 liters of a toluene solution of methylaluminoxane (Al: 1.33 mol/l) over a period of 1 hour. During the addition, the temperature of the system was kept at 0 °C. The reaction was successively carried out at 0 °C for 30 minutes. Then, the temperature of the system was elevated to 95 °C over a period of 1.5 hours, and at the same temperature the reaction was conducted for 20 hours. After that, the temperature of the system was lowered to 60 °C, and the supernatant liquid was removed by decantation.

The solid portion obtained above was washed twice with toluene and then again suspended in 80 liters of toluene. To the reaction system were dropwise added 7.4 liters of a toluene solution of bis(1,3-n-butylmethylcyclopentadienyl)zirconium dichloride (Zr: 34.0 mmol/l) and 1.0 liter of a toluene solution of bis(1,3dimethylcyclopentadienyl)zirconium dichloride (Zr: 28.1 mmol/l) at 80 °C over a period of 30 minutes to further carry out the reaction at 80 °C for 2 hours. Then, the supernatant liquid was removed, and the residue was washed twice with hexane to obtain a solid catalyst containing zirconium in an amount of 3.6 mg per 1 g of the solid catalyst.

### [Polymerization]

A 2-liter stainless autoclave thoroughly purged with nitrogen was charged with 150 g of sodium chloride (special grade, available from Wako Junyaku K.K.), followed by drying at 90 °C for 1 hour under reduced pressure. Then, into the autoclave was introduced a mixed gas consisting of ethylene, 1-butene and hydrogen (1-butene content: 2.6 % by mol, hydrogen content: 0.012 % by mol) to recover the pressure in the system to atmospheric pressure, and the temperature of the system was set to 70 °C.

Subsequently, to the autoclave were added 0.007 mg·atom (in terms of zirconium atoms) of the solid catalyst prepared above and 0.7 mmol of triisobutylaluminium.

Thereafter, a mixed gas having the same composition as described above was introduced into the autoclave to initiate polymerization at a total pressure of 8 kg/cm²-G. The temperature in the system immediately rose to 80 °C.

Then, only the mixed gas was supplied to keep the total pressure at 8 kg/cm²-G, and polymerization was further conducted at 80 °C for 1.5 hours.

After the polymerization was completed, the reaction product was washed with water to remove sodium chloride. Then, the remaining polymer was washed with methanol and dried at 80 °C overnight under reduced pressure. As a result, an ethylene/1-butene copolymer having an MFR, as measured at 190 °C under a load of 2.16 kg, of 1.9 g/10 min, a density of 0.921 g/cm³ and a decane-soluble portion at 23 °C of 0.21 % by weight was obtained in an amount of 276 g.

The ethylene/1-butene copolymer was subjected to inflation by the use of a single-screw extruder (20mmφ.L/D=26) equipped with a die of 25 mmφ (lip width : 0.7 mm) and a single-slit air ring under the conditions of an air flow rate of 90 L/min, an extrusion rate of 9 g/min, a blow ratio of 1.8:1, a take-up rate of 2.4 m/min and a processing temperature of 200°C, to form a film having a thickness of 30 µm.

The melt properties and other properties of the copolymer and physical properties of the film formed from the copolymer are set forth in Table 1.

As is evident from Table 1, an inflation film having excellent moldability (MT), optical characteristics and strength was obtained from the copolymer.

### Example 2

### [Preparation of a solid catalyst]

The procedure for preparing the solid catalyst in Example 1 was repeated except for varying the amounts of the zirconium compounds to those given below, to prepare a solid catalyst.
Bis(1,3-n-butylmethylcyclopentadienyl)zirconium dichloride: 0.22 mol
Bis(1,3-dimethylcyclopentadienyl)zirconium dichloride: 0.056 mol

In 1 g of the solid catalyst, zirconium was contained in an amount of 3.5 mg.

### [Polymerization]

The procedure for the polymerization in Example 1 was repeated except for varying the composition of the mixed gas consisting of ethylene, 1-butene and hydrogen to that given below.

| | |
|---|---|
| 1-Butene content | 2.4 % by mol |
| Hydrogen content | 0.011 % by mol |

As a result, an ethylene/1-butene copolymer having an MFR of 1.7 g/10 min, a density of 0.924 g/cm³ and a decane-soluble portion at 23 °C of 0.17 % by weight was obtained in an amount of 270 g.

The ethylene/1-butene copolymer was subjected to inflation in the same manner as described in Example 1 to form a film having a thickness of 30 µm.

The melt properties and other properties of the copolymer and physical properties of the film formed from the copolymer are set forth in Table 1.

As is evident from Table 1, an inflation film having excellent moldability (MT), optical characteristics and strength was obtained from the above copolymer.

### Example 3

### [Preparation of a solid catalyst]

The procedure for preparing the solid catalyst in Example 1 was repeated except for varying the amounts of the zirconium compounds to those given below, to prepare a solid catalyst.
Bis(1,3-n-butylmethylcyclopentadienyl)zirconium dichloride: 0.20 mol
Bis(1,3-dimethylcyclopentadienyl)zirconium dichloride: 0.084 mol

In 1 g of the solid catalyst, zirconium was contained in an amount of 3.4 mg.

### [Polymerization]

The procedure for the polymerization in Example 1 was repeated except for varying the composition of the mixed gas consisting of ethylene, 1-butene and hydrogen to that given below.

| | |
|---|---|
| 1-Butene content | 2.5 % by mol |
| Hydrogen content | 0.011 % by mol |

As a result, an ethylene/1-butene copolymer having an MFR of 1.2 g/10 min, a density of 0.923 g/cm³ and a decane-soluble portion at 23 °C of 0.19 % by weight was obtained in an amount of 265 g.

The ethylene/1-butene copolymer was subjected to inflation in the same manner as described in Example 1 to form a film having a thickness of 30 µm.

The melt properties and other properties of the copolymer and physical properties of the film formed from the copolymer are set forth in Table 1.

As is evident from Table 1, an inflation film having excellent moldability (MT), optical characteristics and strength was obtained from the above copolymer.

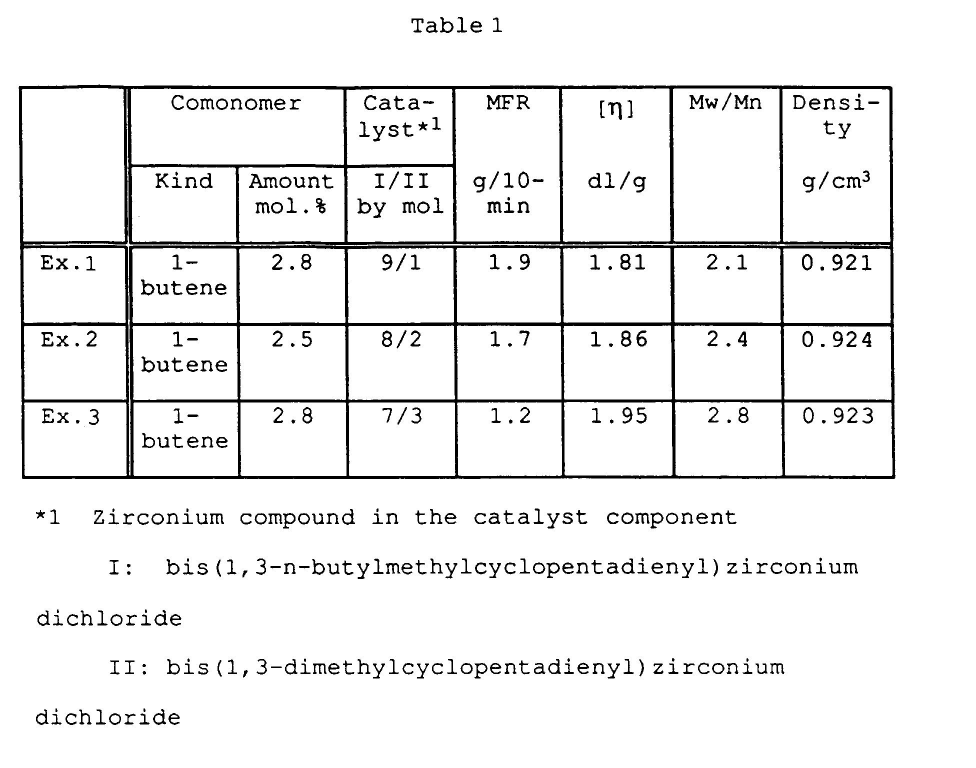

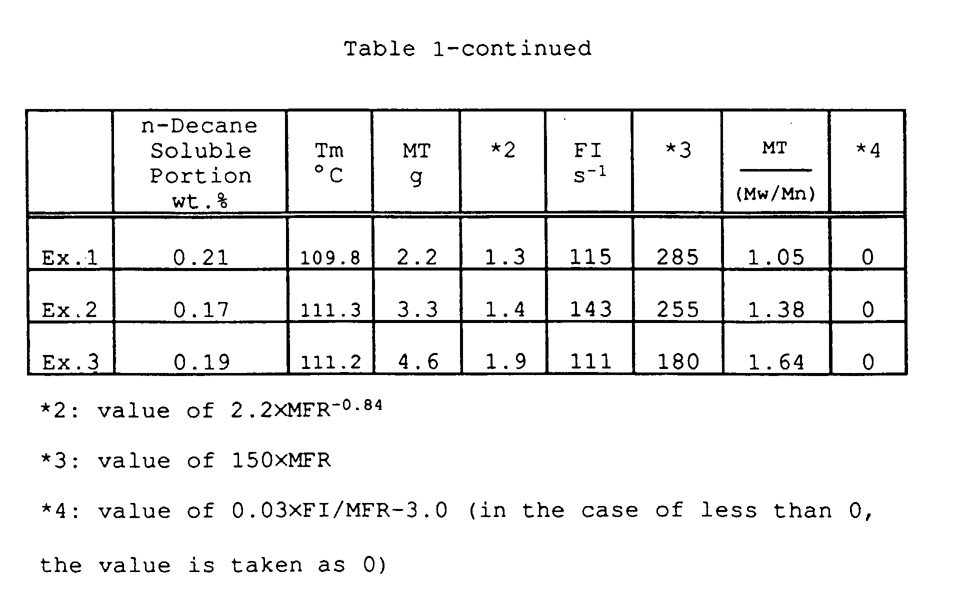

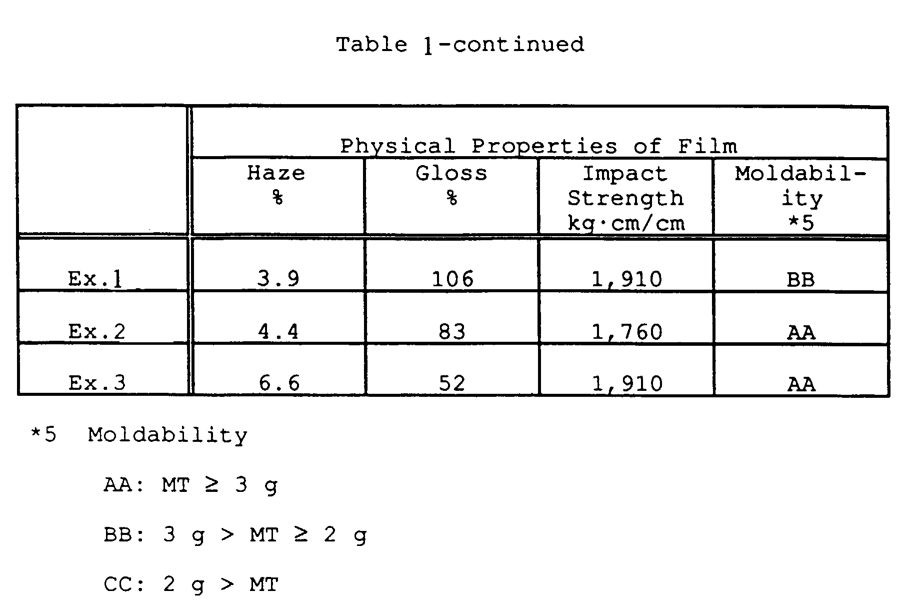

### Example 4

### [Preparation of a prepolymerized catalyst]

To 85 liters of hexane containing 1.7 mol of triisobutylaluminium were added 0.85 kg of the solid catalyst obtained in Example 1 and 255 g of 1-hexene. The resultant mixture was subjected to prepolymerization with ethylene at 35 °C for 12 hours to obtain a prepolymerized catalyst in which polyethylene was prepolymerized in an amount of 10 g per 1 g of the solid catalyst. This ethylene polymer had an intrinsic viscosity [η] of 1.74 dl/g.

### [Polymerization]

A 2-liter stainless autoclave thoroughly purged with nitrogen was charged with 150 g of sodium chloride (special grade, available from Wako Junyaku K.K.), followed by drying at 90 °C for 1 hour under a reduced pressure. Then, into the autoclave was introduced a mixed gas consisting of ethylene, 1-butene and hydrogen (1-butene content: 3.0 % by mol, hydrogen content: 0.012 % by mol) to recover the pressure in the system to atmospheric pressure, and the temperature of the system was set to 70 °C.

Subsequently, to the autoclave were added 0.007 mg·atom (in terms of zirconium atoms) of the prepolymerized catalyst prepared above and 0.7 mmol of triisobutylaluminium.

Thereafter, the above-mentioned mixed gas consisting of ethylene, 1-butene and hydrogen was introduced into the autoclave to initiate polymerization at a total pressure of 8 kg/cm²-G. The temperature in the system immediately rose to 80 °C.

Then, only the mixed gas was supplied to keep the total pressure at 8 kg/cm²-G, and polymerization was further conducted at 80 °C for 1.5 hours.

After the polymerization was completed, the reaction product was washed with water to remove sodium chloride. Then, the remaining polymer was washed with methanol and dried at 80 °C overnight under reduced pressure. As a result, an ethylene/1-butene copolymer having MFR, as measured at 190 °C under a load of 2.16 kg, of 2.0 g/10 min, a density of 0.922 g/cm³ and a decane-soluble portion at 23 °C of 0.20 % by weight was obtained in an amount of 290 g.

The melt properties and other properties of the copolymer are set forth in Table 2.

The ethylene/1-butene copolymer was subjected to inflation in the same manner as described in Example 1 to form a film having a thickness of 30 µm.

The physical properties of the film formed from the copolymer are set forth in Table 2.

As is evident from Table 2, an inflation film having excellent moldability, optical characteristics and strength was obtained from the above copolymer.

### Example 5

### Preparation of an ethylene/α-olefin copolymer

### [Preparation of a catalyst component]

The procedure for preparing the solid catalyst in Example 1 was repeated except for varying the amounts of the transition metal compounds to those given below, to prepare a solid catalyst component.
A toluene solution of bis(1,3-n-butylmethylcyclopentadienyl)zirconium dichloride (Zr: 34.0 mmol/l): 6.6 liters
A toluene solution of bis(1,3-dimethylcyclopentadienyl)zirconium dichloride (Zr: 28.1 mmol/l) : 2.0 liters

### [Preparation of a prepolymerized catalyst]

The procedure for preparing the prepolymerized catalyst in Example 4 was repeated except for using the solid catalyst component prepared above, to obtain a prepolymerized catalyst.

### [Polymerization]

The procedure for the polymerization in Example 4 was repeated except for using the prepolymerized catalyst prepared above and varying the comonomer content to that set forth in Table 2, to obtain an ethylene/1-butene copolymer different in MFR and density from the copolymer of Example 4.

The melt properties and other properties of the copolymer are set forth in Table 2.

The ethylene/1-butene copolymer was subjected to inflation in the same manner as described in Example 1 to form a film having a thickness of 30 µm.

The physical properties of the film formed from the copolymer are set forth in Table 2.

As is evident from Table 2, an inflation film having excellent moldability, optical characteristics and strength was obtained from the above copolymer.

### Example 6

### Preparation of an ethylene/α-olefin copolymer

### [Preparation of a catalyst component]

The procedure for preparing the solid catalyst in Example 1 was repeated except for varying the amounts of the transition metal compounds to those given below, to prepare a solid catalyst component.
A toluene solution of bis(1,3-n-butylmethylcyclopentadienyl)zirconium dichloride (Zr: 34.0 mmol/l) : 5.6 liters
A toluene solution of bis(1,3-dimethylcyclopentadienyl)zirconium dichloride (Zr: 28.1 mmol/l): 2.9 liters

### [Preparation of a prepolymerized catalyst]

The procedure for preparing the prepolymerized catalyst in Example 4 was repeated except for using the solid catalyst component prepared above, to obtain a prepolymerized catalyst.

### [Polymerization]

The procedure for the polymerization in Example 4 was repeated except for using the prepolymerized catalyst prepared above and varying the comonomer content to that set forth in Table 2, to obtain an ethylene/1-butene copolymer different in MFR and density from the copolymer of Example 4.

The melt properties and other properties of the copolymer are set forth in Table 2.

The ethylene/1-butene copolymer was subjected to inflation in the same manner as described in Example 1 to form a film having a thickness of 30 µm.

The physical properties of the film formed from the copolymer are set forth in Table 2.

As is evident from Table 2, an inflation film having excellent moldability, optical characteristics and strength was obtained from the above copolymer.

### Example 7

The procedure of Example 5 was repeated except for using 1-hexene as a comonomer in place of 1-butene, to obtain an ethylene/1-hexene copolymer.

The melt properties and other properties of the copolymer are set forth in Table 2.

The ethylene/1-hexene copolymer was subjected to inflation in the same manner as described in Example 1 to form a film having a thickness of 30 µm.

The physical properties of the film formed from the copolymer are set forth in Table 2.

As is evident from Table 2, an inflation film having excellent moldability, optical characteristics and strength was obtained from the above copolymer.

### Comparative Example 1

The procedure of Example 4 was repeated except for using bis(1,3-n-butylmethylcyclopentadienyl)zirconium dichloride singly as the transition metal compound catalyst component and varying the comonomer content to that set forth in Table 2, to prepare an ethylene/1-butene copolymer.

The melt properties and other properties of the copolymer are set forth in Table 2.

The ethylene/1-butene copolymer was subjected to inflation in the same manner as described in Example 1 to form a film having a thickness of 30 µm.

The physical properties of the film formed from the copolymer are set forth in Table 2.

### Comparative Example 2

The procedure of Example 4 was repeated except for using bis(1,3-dimethylcyclopentadienyl)zirconium dichloride singly as the transition metal compound catalyst component and varying the comonomer content to that set forth in Table 2, to prepare an ethylene/1-butene copolymer.

The melt properties and other properties of the copolymer are set forth in Table 2.

The ethylene/1-butene copolymer was subjected to inflation in the same manner as described in Example 1 to form a film having a thickness of 30 µm.

The physical properties of the film formed from the copolymer are set forth in Table 2.

### Comparative Example 3

The procedure of Example 4 was repeated except for using bis(1,3-dimethylcyclopentadienyl)zirconium dichloride singly as the transition metal compound catalyst component and varying the comonomer content to that set forth in Table 2, to prepare an ethylene/1-butene copolymer.

The melt properties and other properties of the copolymer are set forth in Table 2.

The ethylene/1-butene copolymer was subjected to inflation in the same manner as described in Example 1 to form a film having a thickness of 30 µm.

The physical properties of the film formed from the copolymer are set forth in Table 2.

### Comparative Example 4

The procedure of Comparative Example 3 was repeated except for using 1-hexene as a comonomer in place of 1-butene, to obtain an ethylene/1-hexene copolymer. The melt properties and other properties of the copolymer are set forth in Table 2.

The ethylene/1-hexene copolymer was subjected to inflation in the same manner as described in Example 1 to form a film having a thickness of 30 µm.

The physical properties of the film formed from the copolymer are set forth in Table 2.

As is evident from comparison between the copolymer obtained in Example 4 and the copolymer obtained in Comparative Example 1, the copolymer of Example 4 is superior to the copolymer of Comparative Example 1 in moldability (MT), although the MFR of the copolymer of Example 4 is higher than that of the copolymer of Comparative Example 1.

Further, when the copolymer obtained in Example 5 and the copolymer obtained in Comparative Example 2, both having the same MFR, are compared with each other, the copolymer of Example 5 is superior to the copolymer of Comparative Example 2 in moldability (MT). Likewise, when the copolymer obtained in Example 6 and the copolymer obtained in Comparative Example 3, both having almost the same MFR, are compared with each other, the copolymer of Example 6 is superior to the copolymer of Comparative Example 3 in moldability (MT) .

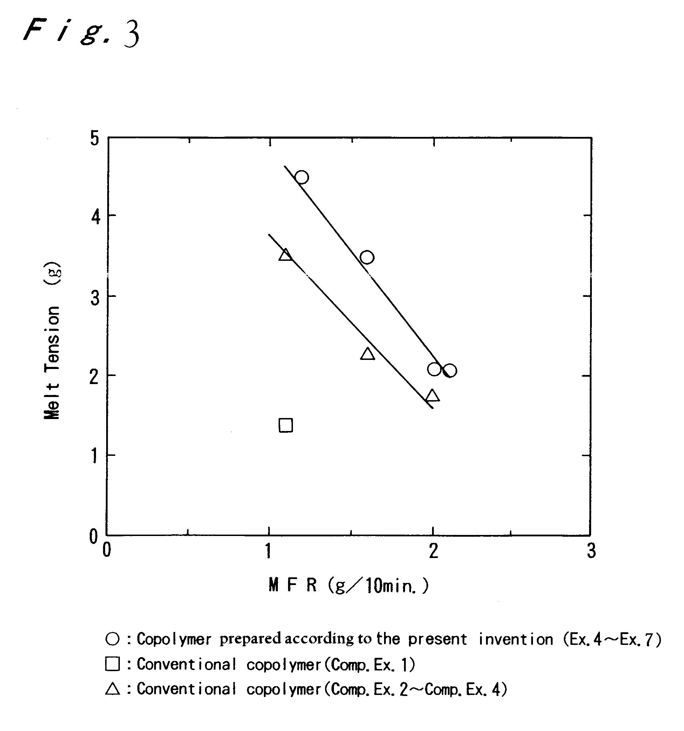

Fig. 3 shows the relationship between the MFR and MT of the ethylene/α-olefin copolymer of the present invention and the relationship between MFR and MT of a conventional ethylene/α-olefin copolymer.

When the haze of the film formed from the copolymer obtained in Example 5 is compared with that of the films formed from the copolymers obtained in Comparative Examples 1, 2 and 3, all the copolymers having almost the same MFR and density, the film of Example 5 is superior to the other films in the transparency.

Further, when the haze of the film formed from the copolymer obtained in Example 7 is compared with that of the film obtained in Comparative Example 4, both copolymers having almost the same MFR, the film of Example 7 is superior to the film of Comparative Example 4 in transparency, although the copolymer of Example 7 has a density which is a little higher than that of the copolymer of Comparative Example 4.

The catalysts used in Examples 4 to 7 contained both the transition metal compound catalyst component contained in the catalyst component used in Comparative Example 1 and the transition metal compound catalyst component contained in the catalyst component used in Comparative Examples 2 to 4. The ethylene/α-olefin copolymer prepared by using both of the transition metal compound catalyst components had an improved moldability (MT) and transparency of an inflation film formed therefrom than the copolymers prepared using each transition metal compound catalyst component singly.

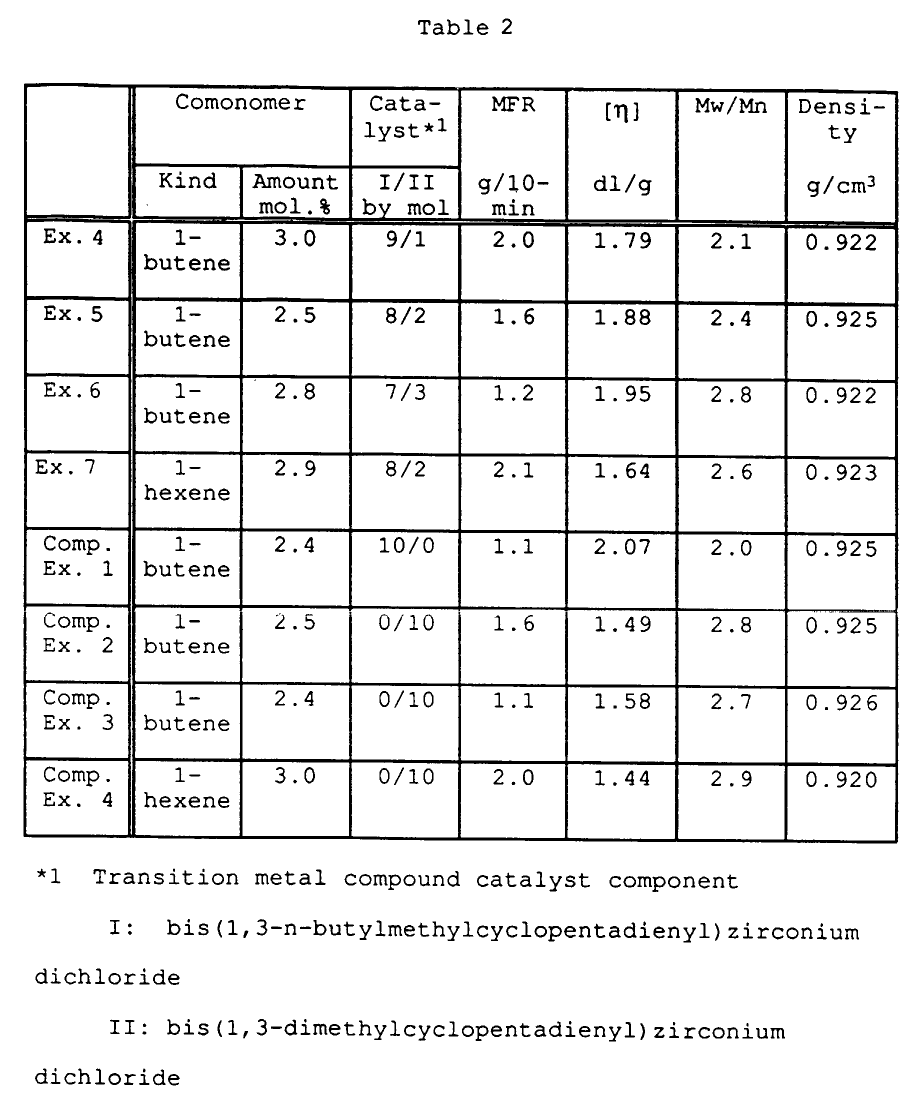

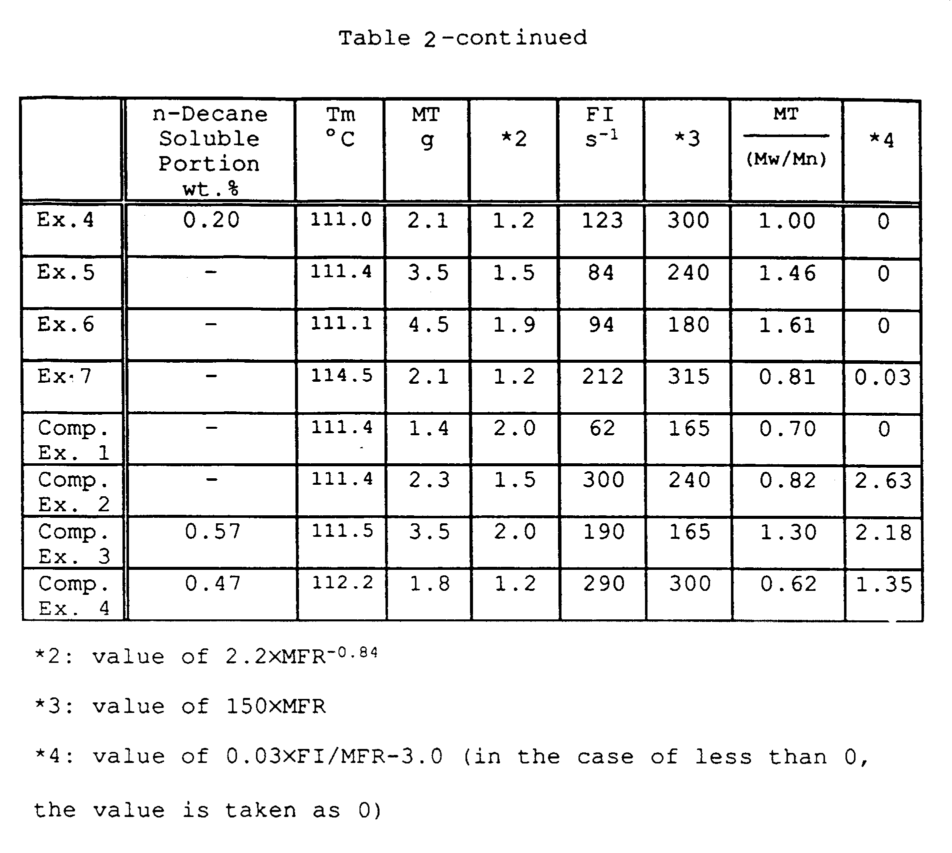

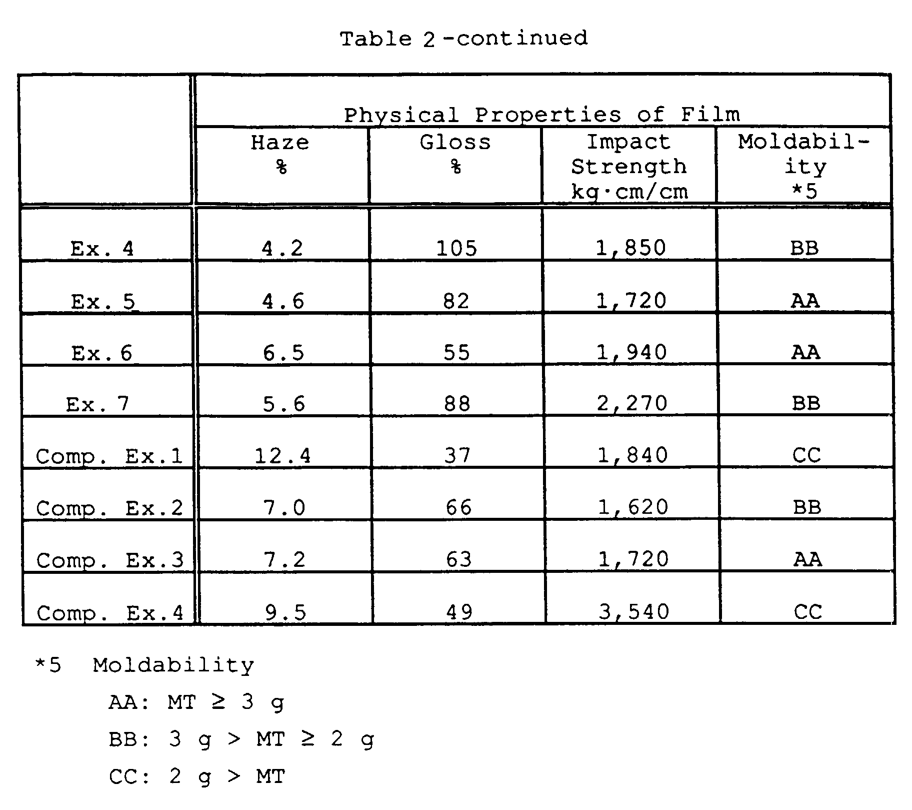

### Example 8

### [Polymerization]

In a fluidized bed gas phase polymerizer of the continuous type, ethylene was copolymerized with 1-hexene at a total pressure of 20 kg/cm²-G and a polymerization temperature of 80 °C. To the polymerizer were continuously fed the prepolymerized catalyst prepared in Example 4 at a feed rate of 0.18 mmol/hr in terms of zirconium atons and triisobutylaluminium at a feed rate of 10 mmol/hr while continuously feeding ethylene, 1-hexene, hydrogen and nitrogen to maintain a constant gas composition (gas composition: 1-hexene/ethylene = 0.030, hydrogen/ethylene = 5.5x10⁻⁴, ethylene concentration = 25 %) during the polymerization.

Thus, an ethylene/1-hexene copolymer (A-1) was obtained in an amount of 6.0 kg/hr. The copolymer had an MFR of 2.1 g/10 min and a density of 0.923 g/cm³. The physical properties of the ethylene/1-hexene copolymer (A-1) are set forth in Table 3.

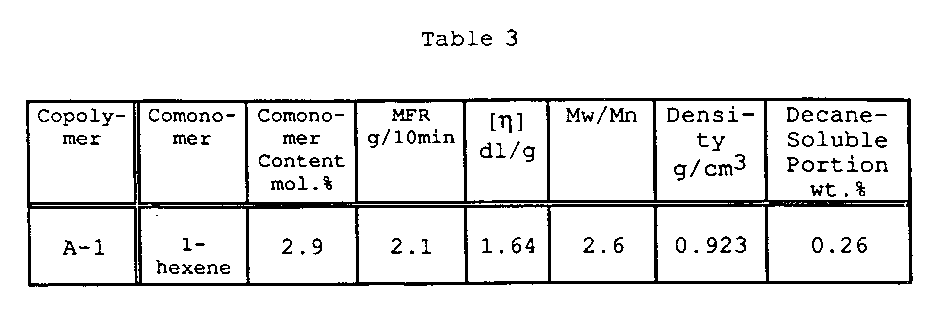

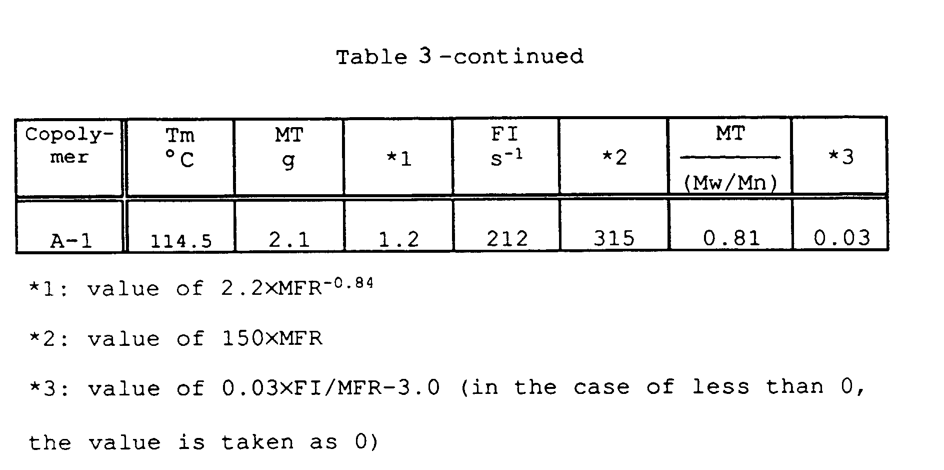

## Claims

1. An olefin polymerization catalyst, comprising a carrier having supported thereon:
(a) an organoaluminium oxy-compound,
(b-I) at least one transition metal compound of the formula [I] :
ML¹ ₓ [I]
wherein M is a transition metal atom from Group IVB of the periodic table, the groups L¹ are ligands co-ordinating to the transition metal atom M, at least two of the ligands L¹ are selected from a cyclopentadienyl group, a methylcyclopentadienyl group, an ethylcyclopentadienyl group and a substituted cyclopentadienyl group having at least one substituent group selected from a hydrocarbon group of 3 to 10 carbon atoms, and each of the other ligands L¹ is a hydrocarbon group of 1 to 12 carbon atoms, an alkoxy group, an aryloxy group, a trialkylsilyl group, a halogen atom or a hydrogen atom, and X is a valence of the transition metal atom M; and
(b-II) at least one transition metal compound of the formula [II] :
ML² ₓ [II]
wherein M is a transition metal atom from Group IVB of the periodic table, the groups L² are ligands co-ordinating to the transition metal atom, at least two of the ligands L² are substituted cyclopentadienyl groups having 2 to 5 substituent groups selected from a methyl group and an ethyl group, and each of the other ligands L² is a hydrocarbon group of 1 to 12 carbon atoms, an alkoxy group, an aryloxy group, a trialkylsilyl group, a halogen atom or a hydrogen atom, and X is a valence of the transition metal atom M.

2. A catalyst according to claim 1 further comprising:
(c) an organoaluminium compound supported on the carrier.

3. A catalyst according to claim 1 or 2 which further comprises (d) unsupported organoaluminium compound.

4. A prepolymerized olefin polymerization catalyst obtainable by prepolymerizing an olefin on a catalyst as defined in claim 1 or 2.

5. A catalyst according to claim 4 which further comprises (d) unsupported organoaluminium compound.

6. A process for olefin polymerization, comprising polymerizing an olefin in the presence of an olefin polymerization catalyst as defined in any one of the claims 1 to 5.

7. A process according to claim 6 wherein the olefin is ethylene or ethylene and an α-olefin of 3 to 20 carbon atoms, the polymer produced having the following properties:
(i) a density of 0.850 to 0.980 g/cm³,
(ii) a melt flow rate (MFR) at 190°C under a load of 2.16 kg of 0.01 to 200 g/10 min,
(iii) the melt tension (MT (g)), measured at a resin temperature of 190°C, an extrusion rate of 15 mm/min and a take up rate of 10 to 20 m/min using a MT measuring apparatus having a nozzle diameter of 2.09 mmφ and a nozzle length of 8 mm, and the melt flow rate (MFR) satisfy the relation${\text{MT > 2.2 x MFR}}^{\text{-0.84}} \text{,}$ and
(iv) the flow index (FI (1/sec)), measured at a resin temperature of 190°C and a shear stress of 5 x 10⁴ to 3 x 10⁶ dyne/cm² using a capillary type flow property tester, using the following nozzle diameters (capillary) depending on the MFR (g/10 min) of the resin:
| | |
|---|---|
| MFR > 20 | 0.5 mm |
| 20 ≥ MFR > 3 | 1.0 mm |
| 3 ≥ MFR > 0.8 | 2.0 mm |
| 0.8 ≥ MFR | 3.0 mm, |
defined by a shear rate which is given when a shear stress of molten copolymer at 190°C reaches 2.4 x 10⁶ dyne/cm² and the melt flow rate (MFR) satisfy the relation$\text{FI < 150 x MFR.}$

8. A process according to claim 7 wherein the polymer has the following further properties:
(v) a molecular weight distribution (Mw/Mn) measured by GPC of 1.5 to 4, and
(vi) MT/(Mw/Mn) and FI/MFR satisfy the relation$\text{MT/(Mw/Mn) > 0.03 × FI/MFR - 3.0}$ with the proviso that when the value of 0.03 × FI/MFR - 3.0 is less than 0, it is taken as 0.

9. A process according to any one of claims 6 to 8 which further comprises forming the polymer into a film.

10. A process according to any one of claims 6 to 8 which further comprises forming the polymer into a molded article.

## Patentansprüche

1. Olefinpolymerisationskatalysator, umfassend einen Träger und darauf
(a) eine Organoaluminiumoxyverbindung,
(b-I) mindestens eine Übergangsmetallverbindung der Formel [I]:
ML¹ ₓ [I]
wobei M ein Übergangsmetallatom der Gruppe IVB des Periodensystems ist, die Gruppen L¹ Liganden sind, die das Übergangsmetallatom M koordinieren, wobei mindestens zwei der Liganden L¹ ausgewählt sind aus einer Cyclopentadienylgruppe, einer Methylcyclopentadienylgruppe, einer Ethylcyclopentadienylgruppe und einer substituierten Cyclopentadienylgruppe mit mindestens einer Substituentengruppe, ausgewählt aus einer Kohlenwasserstoffgruppe mit 3 bis 10 Kohlenstoffatomen und jeder der anderen Liganden L¹ eine Kohlenwasserstoffgruppe mit 1 bis 12 Kohlenstoffatomen, eine Alkoxygruppe, eine Aryloxygruppe, eine Trialkylsilylgruppe, ein Halogenatom oder ein Wasserstoffatom ist und x die Wertigkeit des Übergangsmetallatoms M ist, und
(b-II) mindestens eine Übergangsmetallverbindung der Formel [II]:
ML² ₓ [II]
wobei M ein Übergangsmetallatom der Gruppe IVB des Periodensystems ist, die Gruppen L² Liganden sind, die das Übergangsmetallatom koordinieren, wobei mindestens zwei der Liganden L² substituierte Cyclopentadienylgruppen mit 2 bis 5 Substituenten, ausgewählt aus einer Methylgruppe und einer Ethylgruppe, sind und jeder der anderen Liganden L² eine Kohlenwasserstoffgruppe mit 1 bis 12 Kohlenstoffatomen, eine Alkoxygruppe, eine Aryloxygruppe, eine Trialkylsilylgruppe, ein Halogenatom oder ein Wasserstoffatom ist und x die Wertigkeit des Übergangsmetallatoms M ist.

2. Katalysator nach Anspruch 1, umfassend ferner:
(c) eine Organoaluminiumverbindung auf dem Träger.

3. Katalysator nach Anspruch 1 oder 2, umfassend ferner (d) eine Organoaluminiumverbindung ohne Träger.

4. Prepolymerisierter Olefinpolymerisationskatalysator, erhältlich durch Prepolymerisieren eines Olefins auf dem Katalysator nach Anspruch 1 oder 2.

5. Katalysator nach Anspruch 4, umfassend ferner (d) eine Organoaluminiumverbindung ohne Träger.

6. Verfahren zur Olefinpolymerisation, umfassend das Polymerisieren eines Olefins in Gegenwart eines Olefinpolymerisationskatalysators nach einem der Ansprüche 1 bis 5.

7. Verfahren nach Anspruch 6, wobei das Olefin Ethylen oder Ethylen und ein α-Olefin mit 3 bis 20 Kohlenstoffatomen ist, das erzeugte Polymer die folgendne Eigenschaften besitzt:
(i) eine Dichte von 0,850 bis 0,980 g/cm³,
(ii) eine Fließfähigkeit (MFR) bei 190°C unter einer Last von 2,16 kg von 0,01 bis 200 g/10 min.,
(iii) die Schmelzspannung (MT (g)), gemessen bei einer Harztemperatur von 190°C, einer Extrusionsgeschwindigkeit von 15 mm/min. und einer Aufnahmegeschwindigkeit von 10 bis 20 m/min. unter Anwendung einer MT-Meßvorrichtung mit einem Düsendurchmesser von 2,09 mm und einer Düsenlänge von 8 mm und die Fließfähigkeit (MFR) der folgenden Beziehung entsprechen${\text{MT > 2,2 x MFR}}^{\text{-0,84}}$ und
(iv) der Fließindex (FI (1/sek.)), gemessen bei einer Harztemperatur von 190°C und einer Scherspannung von 5 x 10⁴ bis 3 x 10⁶ Dyn/cm² unter Anwendung eines Testers vom Kapillartyp unter Anwendung von Düsendurchmessern (Kapillar), abhängig von dem MFR (g/10 min.) des Harzes:
| | |
|---|---|
| MFR > 20 | 0,5 mm |
| 20 ≥ MFR > 3 | 1,0 mm |
| 3 ≥ MFR > 0,8 | 2,0 mm |
| 0,8 ≥ MFR | 3,0 mm |
definiert durch eine Schergeschwindigkeit, die gegeben ist, wenn die Scherspannung des geschmolzenen Copolymers bei 190°C 2,4 x 10⁶ Dyn/cm² erreicht und die Fließfähigkeit (MFR) der folgenden Beziehung entspricht$\text{FI < 150 x MFR.}$

8. Verfahren nach Anspruch 7, wobei das Polymer die folgenden weiteren Eigenschaften aufweist:
(v) eine Molekulargewichtsverteilung (Mw/Mn), gemessen durch GPC von 1,5 bis 4 und
(vi) MT/(Mw/Mn) und FI/MFR der folgenden Beziehung entsprechen$\text{MT/(Mw/Mn) > 0,03 x FI/MFR - 3,0}$ mit der Maßgabe, daß, wenn der Wert 0,03 x FI/MFR - 3,0 kleiner als 0 ist, er als 0 angenommen wird.

9. Verfahren nach einem der Ansprüche 6 bis 8, umfassend ferner das Formen des Polymers zu einer Folie.

10. Verfahren nach einem der Ansprüche 6 bis 8, umfassend ferner das Formen des Polymers zu einem Formkörper.

## Revendications

1. Catalyseur de polymérisation d'oléfine, qui comprend un support sur lequel sont fixés :
(a) un composé organoaluminium oxygéné,
(b-I) au moins un dérivé de métal de transition de formule [I] :
ML¹ ₓ [I]
dans laquelle M désigne un atome de métal de transition du Groupe IVB du tableau périodique, les groupes L¹ désignent des ligands liés par coordination à l'atome de métal de transition M, au moins deux des ligands L¹ sont choisis parmi le groupe cyclopentadiényle, le groupe méthylcyclopentadiényle, le groupe éthylcyclopentadiényle et les groupes cyclopentadiényles substitués ayant au moins un substituant choisi parmi les groupes hydrocarbonés ayant 3 à 10 atomes de carbone, et chacun des autres ligands L¹ est un groupe hydrocarboné ayant 1 à 12 atomes de carbone, un groupe alcoxy, un groupe aryloxy, un groupe trialkylsilyle, un atome d'halogène ou un atome d'hydrogène, et x désigne une valence du métal de transition M, et
(b-II) au moins un dérivé de métal de transition de formule [II]
ML² ₓ [II]
dans laquelle M désigne un atome de métal de transition du Groupe IVB du tableau périodique, les groupes L² désignent des ligands liés par coordination à l'atome de métal de transition, au moins deux des ligands L² sont des groupes cyclopentadiényles substitués ayant 2 à 5 substituants choisis parmi le groupe méthyle et le groupe éthyle, et chacun des autres ligands L² est un groupe hydrocarboné ayant 1 à 12 atomes de carbone, un groupe alcoxy, un groupe aryloxy, un groupe trialkylsilyle, un atome d'halogène ou un atome d'hydrogène, et x désigne une valence du métal de transition M.

2. Catalyseur selon la revendication 1, qui contient en outre :
(c) un composé organoaluminium fixé sur le support.

3. Catalyseur selon la revendication 1 ou 2, qui contient en outre (d) un composé organoaluminium non fixé.

4. Catalyseur de polymérisation d'oléfine prépolymérisé, que l'on peut obtenir en prépolymérisant une oléfine sur un catalyseur tel que défini dans la revendication 1 ou 2.

5. Catalyseur selon la revendication 4, qui contient en outre (d) un composé organoaluminium non fixé.

6. Procédé de polymérisation d'oléfine, qui comprend la polymérisation d'une oléfine en présence d'un catalyseur de polymérisation d'oléfine, tel que défini dans l'une quelconque des revendications 1 à 5.

7. Procédé selon la revendication 6, dans lequel l'oléfine est l'éthylène ou un mélange d'éthylène et d'une dioléfine ayant 3 à 20 atomes de carbone, le polymère produit ayant les propriétés suivantes :
(i) une densité de 0,850 à 0,980 g/cm³,
(ii) un indice de fluidité à l'état fondu (MFR), à 190°C, sous une charge de 2,16 kg, de 0,01 à 200 g/10 min,
(iii) la tension à l'état fondu (MT (g)), mesurée à une température de résine de 190°C, une vitesse d'extrusion de 15 mm/min et une vitesse de reprise de 10 à 20 m/min, à l'aide d'un appareil de mesure de MT, ayant un diamètre d'ajutage de 2,09 mm et une longueur d'ajutage de 8 mm, et l'indice de fluidité à l'état fondu (MFR) satisfont à la relation :${\text{MT > 2,2 x MFR}}^{\text{-0.84}} \text{,}$ et
(iv) l'indice d'écoulement (FI (1/sec)), mesuré à une température de résine de 190°C et une contrainte de cisaillement de 5 x 10⁴ à 3 x 10⁶ dyne/cm², à l'aide d'un appareil de mesure d'écoulement de type à capillaire, utilisant les diamètres d'ajutage (capillaire) suivants selon le MFR (g/10 min) de la résine :
| | |
|---|---|
| MFR > 20 | 0,5 mm |
| 20 ≥ MFR > 3 | 1,0 mm |
| 3 ≥ MFR > 0,8 | 2,0 mm |
| 0,8 ≥ MFR | 3,0 mm, |
et défini par une vitesse de cisaillement qui est obtenue lorsque la contrainte de cisaillement du copolymère fondu à 190°C atteint 2,4 x 10⁶ dyne/cm², et l'indice de fluidité à l'état fondu (MFR) satisfont à la relation:$\text{FI < 150 x MFR.}$

8. Procédé selon la revendication 7, dans lequel le polymère produit possède les propriétés supplémentaires suivantes :
(v) une distribution de masses moléculaires (Mp/Mn), mesurée par CPG, de 1,5 à 4, et
(vi) MT/(Mp/Mn) et FI/MFR satisfont à la relation :$\text{MT/(Mp/Mn) > 0,03 x FI/MFR - 3,0,}$ étant entendu que, lorsque la valeur de 0,03 x FI/MFR - 3,0 est inférieure à 0, elle est prise égale à 0.

9. Procédé selon l'une quelconque des revendications 6 à 8, qui comprend en outre la mise du polymère sous la forme d'un film.

10. Procédé selon l'une quelconque des revendications 6 à 8, qui comprend en outre la mise du polymère sous la forme d'un article moulé.
